# EUROPÄISCHE PATENTSCHRIFT

(11) **EP 3 911 863 B1**
(45) Veröffentlichungstag und Bekanntmachung des Hinweises auf die Patenterteilung: **23.08.2023**
(21) Anmeldenummer: 20750600.7
(22) Anmeldetag: 13.07.2020
(51) Int. Cl.: F16B 5/00, F16B 47/00, B62J 11/00, F16B 1/00

(54) **VERBINDUNGSVORRICHTUNG ZUM LÖSBAREN VERBINDEN ZWEIER BAUGRUPPEN**
CONNECTING APPARATUS FOR RELEASABLY CONNECTING TWO ASSEMBLIES
APPAREIL DE LIAISON POUR RELIER DE MANIÈRE AMOVIBLE DEUX ENSEMBLES

(30) Priorität: 04.09.2019 DE 102019123714
(43) Veröffentlichungstag der Anmeldung: 24.11.2021
(60) Teilanmeldung: 21192155.6
(73) Patentinhaber: Fidlock GmbH, 30659 Hannover (DE)
(72) Erfinder: BLECKAT, Björn, 30419 Hannover (DE); BOTKUS, Breido, 30175 Hannover (DE); FIEDLER, Joachim, 30519 Hannover (DE)
(74) Vertreter: Maikowski & Ninnemann Patentanwälte Partnerschaft mbB
(86) Internationale Anmeldenummer: PCT/EP2020/069800
(87) Internationale Veröffentlichungsnummer: WO 2021/043482

(56) Entgegenhaltungen:
- WO-A2-2019/086648
- CN-A- 102 705 576
- JP-U- S4 929 371
- US-A- 5 511 752

## Beschreibung

Die Erfindung betrifft eine Verbindungsvorrichtung zum lösbaren Verbinden zweier Baugruppen nach dem Oberbegriff des Anspruchs 1.

Eine derartige Verbindungsvorrichtung weist ein Verschlussmodul auf, das einer ersten der Baugruppen zugeordnet ist und eine Gehäusebaugruppe, ein an der Gehäusebaugruppe verstellbar angeordnetes Verstellelement und ein Unterdruckelement aufweist. Die Verbindungsvorrichtung umfasst zudem eine Ansetzbaugruppe, die einer zweiten der Baugruppen zugeordnet ist. Das Unterdruckelement ist entlang einer Ansetzrichtung mit der Ansetzbaugruppe verbindbar und wirkt in einer verbundenen Stellung derart mit der Ansetzbaugruppe zusammen, dass bei Belastung des Verschlussmoduls und der Ansetzbaugruppe relativ zueinander das Unterdruckelement und die Ansetzbaugruppe aufgrund einer Unterdruckwirkung zwischen dem Unterdruckelement und der Ansetzbaugruppe aneinander gehalten sind.

Eine Verbindungsvorrichtung soll vorliegend insbesondere zum Befestigen eines elektronischen Geräts an einer zugeordneten Baugruppe dienen können. So kann die Verbindungsvorrichtung beispielsweise die Befestigung einer Kamera an einem Helm (beispielsweise einem Skihelm oder einem Fahrradhelm) oder auch die Befestigung eines Mobiltelefons oder eines anderen elektronischen Geräts in oder an einem Fahrzeug, z.B. an der Windschutzscheibe oder am Armaturenbrett eines Kraftfahrzeugs oder an einer Lenkerstange eines Fahrrads oder Motorrads, ermöglichen.

Wird eine Kamera an einem Helm, beispielsweise einem Skihelm oder einem Fahrradhelm, oder ein Mobiltelefon an einem Armaturenbrett eines Fahrzeugs oder am Lenker eines Fahrrads befestigt, so können bei Gebrauch impulsartige Stoßkräfte wirken, die aufgefangen und abgeleitet werden müssen und insbesondere nicht zu einem Lösen der Kamera oder des Mobiltelefons führen sollen. Eine Verbindungsvorrichtung zum Befestigen eines elektronischen Geräts, beispielsweise einer Kamera oder eines Mobiltelefons, soll daher insbesondere in der Lage sein, kurzzeitig wirkende, impulsartige Stoßkräfte aufzunehmen.

Zum Befestigen ganz unterschiedlicher Baugruppen aneinander, beispielsweise auch zum Befestigen eines elektronischen Geräts in Form eines Mobiltelefons oder Navigationsgeräts in einem Fahrzeug, sind Verbindungsvorrichtungen bekannt, die eine Halterung mittels Unterdruck bereitstellen. So ist aus der US 2013/0323388 A1 eine Verbindungsvorrichtung bekannt, die ein Unterdruckelement in Form eines Saugnapfes verwendet, um ein Mobiltelefon an der Windschutzscheibe eines Fahrzeugs festzulegen. Der Saugnapf wird hierzu an die Windschutzscheibe angesetzt, wobei an dem Saugnapf ein Magnetelement angeordnet ist, das mit einem magnetisch wirkenden Element auf Seiten der Windschutzscheibe zusammenwirken kann, um den Halt an der Windschutzscheibe zu verbessern.

Bei einer aus der US 5,192,043 bekannten Verbindungsvorrichtung zum Befestigen einer Alarmvorrichtung an einer Metallfläche wird eine magnetische Gummifläche an eine Metallfläche angesetzt, wobei bei Ansetzen ein Vakuum entsteht, sodass durch Magnetwirkung zwischen der Gummifläche und der Metallfläche sowie durch Unterdruckkräfte die Alarmvorrichtung an der Metallfläche gehalten wird.

Eine aus der EP 0 689 966 B1 bekannte Verbindungsvorrichtung weist eine magnetische Kontaktplatte auf, an der ein Saugnapf angeordnet ist. Mittels der Verbindungsvorrichtung kann ein Skiträger an einem Fahrzeugdach eines Fahrzeugs befestigt werden.

Solche Verbindungsvorrichtungen sollen zum einen einfach schließbar sein, um eine Verbindung zwischen den zugeordneten Baugruppen herzustellen. Zudem ist aber auch wünschenswert, dass solche Verbindungsvorrichtungen auch einfach zu öffnen sind, um insbesondere ein ruckartiges Abreißen unter Überwindung eines Unterdrucks und gegebenenfalls zusätzlich einer magnetischen Verbindung zu vermeiden.

Aus der WO 2019/086648 A2 ist eine Verbindungsvorrichtung bekannt, bei der ein Verschlussmodul ein Unterdruckelement aufweist, das an eine zugeordnete Ansetzkomponente angesetzt werden kann, um in einer verbundenen Stellung durch Unterdruck mit der Ansetzkomponente zusammenzuwirken. Ein Verstellelement kann verstellt werden, um eine Strömungsöffnung freizugeben, um das Verschlussmodul von der Ansetzkomponente zu lösen.

Aus der US 5,511,752 ist eine Verbindungsvorrichtung bekannt, die einen Saugnapf aufweist. Ein Kappenelement kann zu dem Saugnapf bewegt werden, um eine Strömungsöffnung in dem Saugnapf freizugeben.

Aufgabe der vorliegenden Erfindung ist es, eine Verbindungsvorrichtung zur Verfügung zu stellen, die einfach verwendbar, insbesondere einfach zu schließen, aber auch einfach wieder zu öffnen ist, bei vorteilhafter Verbindung der zugeordneten Baugruppen auch bei einer Stoßbelastung.

Diese Aufgabe wird durch einen Gegenstand mit den Merkmalen des Anspruchs 1 gelöst.

Demnach ist das Verstellelement zum Lösen des Unterdruckelements von der Ansetzbaugruppe um unterschiedliche Raumrichtungen zu der Gehäusebaugruppe verkippbar, um eine Strömungsöffnung in der Gehäusebaugruppe für einen Zustrom von Luft in einen zwischen dem Unterdruckelement und der Ansetzbaugruppe vorhandenen Raum freizugeben.

Bei der Verbindungsvorrichtung wird eine Verbindung zwischen den aneinander zu befestigenden Baugruppen dadurch hergestellt, dass das einer ersten der Baugruppen zugeordnete Verschlussmodul und die der anderen, zweiten der Baugruppen zugeordnete Ansetzbaugruppe entlang einer Ansetzrichtung aneinander angesetzt werden. Beim Ansetzen entsteht ein abgedichteter Raum zwischen dem Unterdruckelement und der Ansetzbaugruppe, sodass die Baugruppen aufgrund einer Unterdruckwirkung aneinander gehalten sind. Solch eine Verbindung kann insbesondere belastbar auf Stoß sein, so dass über die Verbindungsvorrichtung Stoßkräfte aufgefangen und abgeleitet werden können.

Mittels der Verbindungsvorrichtung können beispielsweise eine Kamera an einem Helm oder ein Mobiltelefon in oder an einem Fahrzeug, zum Beispiel an einer Windschutzscheibe oder an einem Armaturenbrett eines Kraftfahrzeugs oder an einer Lenkerstange eines Fahrrads oder Motorrads, befestigt werden.

In der verbundenen Stellung der Verbindungsvorrichtung können das Unterdruckelement und die Ansetzbaugruppe zum Beispiel flächig aneinander anliegen, sodass effektiv kein Raum zwischen dem Unterdruckelement und der Ansetzbaugruppe besteht. Bei einer Belastung der Baugruppen relativ zueinander kann jedoch eine Kraft auf das Verschlussmodul relativ zu der Ansetzbaugruppe wirken, die in Richtung einer Vergrößerung oder Schaffung eines zwischen dem Unterdruckelement und der Ansetzbaugruppe gebildeten Raums wirkt, was einen Unterdruck zwischen dem Unterdruckelement und der Ansetzbaugruppe bewirkt und somit Haltekräfte erzeugt, die das Unterdruckelement an der Ansetzbaugruppe halten und tendenziell größer werden, je stärker das Verschlussmodul gegenüber der Ansetzbaugruppe belastet wird. Das Verschlussmodul wird somit aufgrund Unterdruckwirkung an der Ansetzbaugruppe gehalten, wenn das Verschlussmodul an die Ansetzbaugruppe angesetzt ist.

Das Verschlussmodul weist eine Strömungsöffnung auf, die durch Bewegen des Verstellelements relativ zum Unterdruckelement für einen Zustrom von Luft in einen zwischen dem Unterdruckelement und der Ansetzbaugruppe vorhandenen Raum freigegeben werden kann. Das Verstellelement ist hierbei um unterschiedliche Raumrichtungen und somit durch unterschiedliche Verstellbewegungen zu der Gehäusebaugruppe verstellbar, was eine einfache, intuitive, komfortable Bedienung des Verstellelements durch einen Nutzer zum Lösen des Verschlussmoduls und der Ansetzbaugruppe voneinander ermöglicht.

Dadurch, dass das Verstellelement um unterschiedliche Raumrichtungen zu der Gehäusebaugruppe verkippbar ist, kann das Verstellelement unter Verwendung unterschiedlicher Kippbewegungen zu der Gehäusebaugruppe verstellt und somit zum Lösen des Verschlussmoduls von der Ansetzbaugruppe betätigt werden. Hierbei kann auch eine überlagerte Kippbewegung, die sich aus einem Verkippen um eine erste Kippachse und einem überlagerten Verkippen um eine zweite Kippachse zusammensetzt, zum Betätigen des Verstellelements verwendet werden, sodass ein Nutzer in ganz unterschiedlicher Weise auf das Verstellelement einwirken und dieses betätigen kann, um die Strömungsöffnung freizugeben und somit ein Lösen des Unterdruckelements von der Ansetzbaugruppe zu ermöglichen.

Beispielsweise kann das Verstellelement um beliebige Raumrichtungen innerhalb einer Ebene verkippbar sein. Das Verstellelement kann somit so an der Gehäusebaugruppe gelagert sein, dass ein Verkippen des Verstellelements relativ zu der Gehäusebaugruppe um ganz beliebige Kippachsen möglich ist, wobei ein oder mehrere Kippachsen durch eine mechanische Lagerung definiert sein können oder auch ein freies Verkippen ohne besondere, definierte Kippachse möglich sein kann.

Die Bedienung des Verstellelements kann vorzugsweise händisch durch einen Nutzer erfolgen, indem der Nutzer auf das Verstellelement einwirkt. Die Bedienung des Verstellelements kann hierbei beispielsweise mit den Fingerspitzen erfolgen, indem der Nutzer an dem Verstellelement drückt oder zieht und dadurch das Verstellelement bewegt.

Dadurch, dass das Verstellelement taumelnd um unterschiedliche Raumrichtungen verkippt werden kann, ist auch eine grobmotorische Betätigung, zum Beispiel unter Verwendung der Handfläche oder der Rückseite der Hand oder gegebenenfalls auch mit einem anderen Körperteil, zum Beispiel mit dem Fuß oder Ellenbogen, möglich. Weil das Verstellelement um unterschiedliche Raumrichtungen bewegt werden kann, kommt es auf eine exakte Ausführung einer bestimmten Bewegung nicht an, was ein einfaches, komfortables Betätigen der Verbindungsvorrichtung zum Öffnen ermöglicht.

Das Verstellelement kann hierbei mit einem vergleichsweise großen Hebel (radial zu einer entlang der Ansetzrichtung gerichteten zentralen Achse der Verbindungsvorrichtung) ausgeführt sein, sodass das Verstellelement leichtgängig bewegt werden kann.

Das Verstellelement kann beispielsweise einen Betätigungsabschnitt aufweisen, der sich entlang eines Kreisbogens um die Ansetzrichtung erstreckt und beispielsweise einen konstanten Radius zu einer zentralen Achse der Verbindungsvorrichtung aufweist. Der Betätigungsabschnitt kann beispielsweise einen Winkel größer 90°, beispielsweise größer 180°, beschreiben und kann einen vergleichsweise großen Hebelarm zu der zentralen Achse aufweisen. Beispielsweise kann das Verstellelement mit dem Betätigungsabschnitt die Gehäusebaugruppe radial übertragen.

Die unterschiedlichen Raumrichtungen können eine Ebene senkrecht zur Ansetzrichtung aufspannen. Die unterschiedlichen Raumrichtungen kann hierbei (gedachte) Kippachsen definieren, um die das Verstellelement nach Art einer taumelnden Bewegung verkippbar ist.

Eine erste Kippachse und eine zweite Kippachse können insbesondere senkrecht zueinander gerichtet sein. Beim Verstellen kann das Verstellelement um die erste Kippachse, um die zweite Kippachse oder gleichzeitig um die erste Kippachse und die zweite Kippachse zu der Gehäusebaugruppe verschwenken, sodass auf diese Weise das Verstellelement zu der Gehäusebaugruppe bewegt und dadurch eine Strömungsöffnung in der Gehäusebaugruppe freigegeben wird.

Das Verstellelement kann beispielsweise in der verbundenen Stellung der Verbindungsvorrichtung eine erste Stellung relativ zu dem Unterdruckelement einnehmen, in der die Strömungsöffnung (betrachtet aus Richtung eines Raums zwischen dem Unterdruckelement und der Ansetzbaugruppe) verschlossen ist, sodass ein Zustrom von Luft in den Raum unterbunden ist. Aus dieser ersten Stellung kann das Verstellelement in eine zweite Stellung bewegt werden, um die Strömungsöffnung freizugeben und einen Zustrom von Luft in einen zwischen dem Unterdruckelement und der Ansetzbaugruppe gebildeten Raum zu ermöglichen. Eine Unterdruckwirkung zwischen dem Unterdruckelement und der Ansetzbaugruppe besteht somit, aufgrund des Zustroms durch die Strömungsöffnung, nicht mehr, sodass das Verschlussmodul ohne Unterdruckwirkung von der Ansetzbaugruppe abgenommen werden kann.

In einer vorteilhaften Ausgestaltung ist das Verstellelement in Richtung seiner ersten Stellung vorgespannt. Die Vorspannung kann beispielsweise über ein Federelement erfolgen, das an dem Verstellelement wirkt. Die Vorspannung kann zum Beispiel aber auch über magnetische Elemente und somit magnetisch bewirkt sein. Das Verstellelement nimmt somit selbsttätig, wenn es nicht anderweitig betätigt ist, seine erste Stellung ein und verschließt somit, insbesondere in der verbundenen Stellung der Verbindungsvorrichtung, die Strömungsöffnung, sodass eine Unterdruckwirkung zwischen dem Unterdruckelement und der Ansetzbaugruppe entstehen kann.

Das Verschlussmodul weist hierzu vorzugsweise ein elastisches, zum Beispiel federmechanisch oder magnetische wirkendes Vorspannelement auf, das zum Vorspannen des Verstellelements gegenüber der Gehäusebaugruppe in Richtung der ersten Stellung dient. Bei Verstellen wird das Verstellelement entgegen der vorspannenden Wirkung des Vorspannelements bewegt, sodass nach Beendigung der Betätigung das Verstellelement selbsttätig in seine erste Stellung zurückgestellt wird.

In einer Ausgestaltung ist das Unterdruckelement durch ein zumindest abschnittsweise elastisches Napfelement ausgebildet. Die Ansetzbaugruppe weist ein Ansetzteil auf, das eine Ansetzfläche ausbildet, mit der das Unterdruckelement verbindbar ist, um die dem Verschlussmodul und der Ansetzbaugruppe zugeordneten Baugruppen miteinander zu verbinden. In diesem Fall verwirklicht das Unterdruckelement somit ein Bauteil nach Art eines elastischen Saugnapfes, das an einer Fläche der zugeordneten, zweiten Baugruppe angeordnet werden kann, um unter elastischer Verformung ein Vakuum zwischen dem Unterdruckelement und der Fläche zu bilden und dadurch Haltekräfte zum Halten der Baugruppen aneinander bereitzustellen.

Die Gehäusebaugruppe weist ein erstes Gehäuseteil und ein zweites Gehäuseteil auf, die das Verstellelement zwischen sich aufnehmen. An einem der Gehäuseteile kann beispielsweise eine Verbindungsvorrichtung zur Verbindung mit der zugeordneten, ersten Baugruppe geschaffen sein, beispielsweise zur festen Verbindung des Verschlussmoduls mit einer Lenkerstange eines Fahrrads. In montierter Stellung sind die Gehäuseteile fest miteinander verbunden und nehmen das Verstellelement derart zwischen sich auf, dass das Verstellelement um unterschiedliche Kippachsen zu der Gehäusebaugruppe verkippt und somit zum Lösen der Verbindung des Verschlussmoduls und der Ansetzbaugruppe betätigt werden kann.

In einer Ausgestaltung weist die Gehäusebaugruppe zumindest eine Lagerstelle zur Lagerung des Verstellelements auf. Das Verstellelement kann hierbei beispielsweise zumindest einen Lagerzapfen aufweisen, der in der zumindest einen Lagerstelle der Gehäusebaugruppe aufgenommen ist und somit das Verstellelement zu der Gehäusebaugruppe lagert. Die Lagerstelle ist dabei derart geformt, dass der Lagerzapfen sowohl um die erste Kippachse als auch um die zweite Kippachse in der Lagerstelle verkippbar ist, sodass eine überlagerte Kippbewegung des Verstellelements zu der Gehäusebaugruppe ermöglicht wird.

In einer Ausgestaltung weist das Verstellelement eine Mehrzahl von Lagerzapfen und die Gehäusebaugruppe eine Mehrzahl von Lagerstellen auf. Die Lagerzapfen sind in je einer zugeordneten Lagerstelle der Gehäusebaugruppe aufgenommen. Ein jeder Lagerzapfen ist in der zugeordneten Lagerstelle verkippbar und zudem entlang einer Betätigungsrichtung, entlang derer das Verstellelement an der Gehäusebaugruppe verstellbar ist, bewegbar. Durch eine solche Anordnung von Lagerstellen kann eine Verkippbarkeit des Verstellelements relativ zu der Gehäusebaugruppe um unterschiedliche Raumrichtungen ermöglicht werden, wobei das Verstellelement bei einem Verkippen zu der Gehäusebaugruppe an einer oder an mehreren der Lagerstellen abgestützt sein kann, sich die Abstützung aber in Abhängigkeit von der Kippbewegung unterscheidet. Die Lagerstellen können somit unterschiedliche Kippachsen vorgeben, um die ein Verkippen möglich ist, wobei ein Verkippen auch in überlagerter Weise um unterschiedliche Kippachsen möglich sein kann.

In einer Ausgestaltung sind die Lagerstellen entlang eines Kreises an der Gehäusebaugruppe aneinander angereiht. Der Kreis kann sich beispielsweise entlang der Ebene erstrecken, in der die Raumrichtungen, um die das Verstellelement der Gehäusebaugruppe verkippbar ist, erstreckt sind und die somit durch die Raumrichtungen aufgespannt ist. Die Lagerstellen können entlang des Kreises gleichverteilt angeordnet sein, sodass die Lagerstellen jeweils paarweise einen gleichen Abstand zueinander aufweisen. An einer jeden Lagerstelle kann der jeweils zugeordnete Lagerzapfen sich verkippen und zudem senkrecht zur Ebene des Kreises verstehen, sodass ein Verkippen des Verstellelements um unterschiedliche, in der Ebene des Kreises erstreckte Raumrichtungen relativ zu der Gehäusebaugruppe möglich ist.

Beispielsweise können an der Gehäusebaugruppe drei Lagerstellen geformt sein, die entlang des Kreises aneinander angereiht sind. An dem Verstellelement sind entsprechend drei Lagerzapfen geformt, die den Lagerstellen zugeordnet und an den Lagerstellen abgestützt sind.

Denkbar ist aber auch, an der Gehäusebaugruppe mehr als drei Lagerstellen, zum Beispiel vier, fünf, sechs oder eine größere Anzahl von Lagerstellen zu formen. Das Verstellelement weist eine entsprechende Anzahl von Lagerzapfen auf.

In einer Ausgestaltung ist die Strömungsöffnung konzentrisch zu dem Kreis an der Gehäusebaugruppe angeordnet. Die Strömungsöffnung ist somit mittig relativ zu dem Kreis angeordnet, wobei die Strömungsöffnung zur Ebene des Kreises versetzt sein kann. Ein Ventilelement kann konzentrisch zum Kreis am Verstellelement angeordnet sein, das bei Verstellen des Verstellelements gemeinsam mit dem Verstellelement bewegt wird, um die Strömungsöffnung freizugeben und somit einen Zustrom von Luft in einen zwischen dem Unterdruckelement und der Ansetzbaugruppe vorhandenen Raum freizugeben.

In einer Ausgestaltung weist das Verstellelement einen Betätigungsabschnitt zum Betätigen des Verstellelements durch einen Nutzer auf, der einen Radius aufweist, der größer als der Radius des Kreises ist. Der Betätigungsabschnitt ist somit radial außerhalb des Kreises erstreckt, entlang dessen eine Lagerung des Verstellelements an der Gehäusebaugruppe erfolgt, wobei der Betätigungsabschnitt sich beispielsweise entlang einer Umfangsrichtung umfänglich an dem Verstellelement erstrecken und dabei ringförmig geschlossen sein oder auch aus mehreren Teilstücken bestehen kann.

Über den Betätigungsabschnitt erfolgt eine Betätigung des Verstellelements dadurch, dass ein Nutzer an dem Verstellelement angreift und das Verstellelement über den Betätigungsabschnitt zu der Gehäusebaugruppe verstellt. Weil der Radius des Betätigungsabschnitts - gemessen zum Beispiel zwischen dem Zentrum des Kreises und einem radialen Schwerpunkt des Betätigungsabschnitts, an dem ein Nutzer effektiv eine Kraft in den Betätigungsabschnitt bei üblicher, bestimmungsgemäßer Betätigung einleitet - größer ist als der Radius des Kreises, an dem die Lagerung erfolgt, kann ein Nutzer das Verstellelement komfortabel betätigen, wobei eine Betätigung in unterschiedliche Betätigungsrichtungen, insbesondere auch in unterschiedliche Richtungen senkrecht zur Ebene des Kreises, möglich sein kann.

Beispielsweise kann der Radius des Betätigungsabschnitts mehr als 5 %, vorzugsweise mehr als 10 %, weiter vorzugsweise mehr als 20 %, größer sein als der Radius des Kreises, an dem die Lagerung erfolgt.

Beispielsweise kann die zumindest eine Lagerstelle durch ein Langloch ausgebildet sein. Ein solches Langloch kann eine schwenkbare Lagerung um eine Kippachse bereitstellen und gleichzeitig ein Verkippen um die andere der Kippachsen durch Längsbewegung in dem Langloch ermöglichen.

Alternativ kann die Lagerstelle beispielsweise nach Art einer Kugelkopflagerung ausgebildet sein. In diesem Fall kann der Lagerzapfen auf Seiten des Verstellelements beispielsweise ballig geformt sein. Eine zugeordnete Lagerstelle auf Seiten der Gehäusebaugruppe nimmt den Lagerzapfen auf und stützt diesen derart ab, dass der Lagerzapfen an der Lagerstelle verkippt und gleichzeitig senkrecht zu der Ebene, innerhalb derer die Lagerstellen an der Gehäusebaugruppe angeordnet sind, bewegt werden kann.

In einer Ausgestaltung ist die Strömungsöffnung in einem Boden der Gehäusebaugruppe gebildet, der in der verbundenen Stellung der Ansetzbaugruppe zugewandt ist. Der Boden kann beispielsweise an einem Gehäuseteil der Gehäusebaugruppe geformt sein, das fest mit dem Unterdruckelement verbunden ist. Der Boden kann hierbei zum Beispiel zentral innerhalb des Unterdruckelements angeordnet und vom Unterdruckelement umgeben sein, wobei der Boden in der verbundenen Stellung hin zu der Ansetzbaugruppe weist und in der verbundenen Stellung gegebenenfalls flächig mit der Ansetzbaugruppe in Anlage ist. In der verbundenen Stellung ist die in dem Boden geformte Strömungsöffnung durch das Verstellelement verschlossen, wobei durch Verstellen des Verstellelements die Strömungsöffnung freigegeben werden kann und somit Luft in einen zwischen dem Boden und der Ansetzbaugruppe vorhandenen Raum einströmen kann, um einen Unterdruck zwischen dem Verschlussmodul und der Ansetzbaugruppe aufzuheben und somit das Verschlussmodul und die Ansetzbaugruppe voneinander lösen zu können.

In einer Ausgestaltung weist das Verschlussmodul ein Ventilelement auf, das an dem Verstellelement angeordnet und durch Verstellen des Verstellelements betätigbar ist. Das Ventilelement kann beispielsweise aus einem weichelastischen Material, zum Beispiel einem Gummimaterial geformt sein und so an dem Verstellelement befestigt sein, dass das Ventilelement in der verbundenen Stellung die Strömungsöffnung am Boden des zugeordneten Gehäuseteils der Gehäusebaugruppe abdichtet, durch Verstellen des Verstellelements aber so bewegt werden kann, dass die Strömungsöffnung freigegeben wird und somit Luft in einen zwischen dem Verschlussmodul und der Ansetzbaugruppe vorhandenen Raum einströmen kann.

Das Ventilelement weist, in einer Ausgestaltung, einen Ventilkopf auf, der in der verbundenen Stellung so in die Strömungsöffnung eingreift, dass die Strömungsöffnung verschlossen und somit strömungsdicht abgedichtet ist. Durch Verstellen des Verstellelements kann der Ventilkopf bewegt werden, sodass die Strömungsöffnung freigegeben wird und somit das Verschlussmodul und die Ansetzbaugruppe voneinander gelöst werden können.

In einer Ausgestaltung weist das Verstellelement einen ersten Formschlussabschnitt und die Ansetzbaugruppe einen zweiten Formschlussabschnitt auf. Bei Ansetzen des Verschlussmoduls und der Ansetzbaugruppe aneinander gelangen die Formschlussabschnitte formschlüssig miteinander in Eingriff derart, dass eine Querbewegung zwischen dem Verschlussmodul und der Ansetzbaugruppe gesperrt ist. Mittels der Formschlussabschnitte kann somit insbesondere eine Bewegung quer zu einer Ansetzrichtung, entlang derer das Verschlussmodul und die Ansetzbaugruppe aneinander ansetzbar sind, gesperrt werden, sodass in Querrichtung wirkende Kräfte (also in der Ebene der Ansetzfläche wirkende Kräfte) aufgenommen und abgestützt werden können.

Zusätzlich oder alternativ kann das Verschlussmodul in seiner Drehstellung zu der Ansetzbaugruppe gesichert sein, sodass auch Torsionskräfte aufgenommen und abgestützt werden können. Hierzu kann das Verschlussmodul einen ersten Eingriffsabschnitt aufweisen, während die Ansetzbaugruppe einen zweiten Eingriffsabschnitt aufweist. Bei Ansetzen des Verschlussmoduls und der Ansetzbaugruppe aneinander gelangen die Eingriffsabschnitte sperrend miteinander in Eingriff und sperren auf diese Weise eine Verdrehbewegung des Unterdruckelements gegenüber der Ansetzbaugruppe.

Die Eingriffsabschnitte können beispielsweise durch eine (vorzugsweise an einem kreisförmigen Randabschnitt umlaufende) Verzahnung an dem Verschlussmodul einerseits und der Ansetzbaugruppe andererseits gebildet sein.

In einer Ausführungsform weist das Verschlussmodul ein erstes Magnetelement zum magnetischen Unterstützen des Herstellens der Verbindung der Baugruppen miteinander auf. Das erste Magnetelement kann beispielsweise an der Gehäusebaugruppe angeordnet sein. Alternativ kann das Magnetelement auch an dem Verstellelement angeordnet sein und wird somit mit dem Verstellelement zusammen bewegt.

Ein zweites Magnetelement kann demgegenüber an der Ansetzbaugruppe angeordnet sein.

Die Magnetelemente des Verschlussmoduls einerseits und der Ansetzbaugruppe andererseits dienen dazu, beim Ansetzen des Verschlussmoduls und der Ansetzbaugruppe aneinander eine magnetische Anziehungskraft bereitzustellen, sodass die Herstellung des Unterdrucks in magnetisch unterstützter Weise (vorzugsweise selbsttätig) erfolgt. Bei Ansetzen werden das Verschlussmodul und die Ansetzbaugruppe aufgrund der magnetischen Wechselwirkung magnetisch anziehend zueinander hingezogen, sodass ein (Beinahe-)Vakuum zwischen dem Unterdruckelement und der Ansetzbaugruppe bewirkt wird, beispielsweise indem das als elastisches Napfelement ausgebildete Unterdruckelement gegen die eine Ansetzfläche ausbildende Ansetzbaugruppe gepresst wird.

Das erste Magnetelement und das zweite Magnetelement können jeweils durch einen Permanentmagneten oder auch eine Anordnung von mehreren Permanentmagneten gebildet sein und wirken zum Schließen der Verbindungsvorrichtung magnetisch anziehend zusammen, indem sie mit ungleichnamigen Magnetpolen aufeinander zu weisen. Denkbar ist aber auch, dass ein Magnetelement durch einen Permanentmagneten oder eine Anordnung von mehreren Permanentmagneten gebildet ist, während das andere Magnetelement durch einen magnetischen Anker aus einem ferromagnetischen Material gebildet ist.

In einer Ausgestaltung sind das erste Magnetelement und/oder das zweite Magnetelement (jeweils) durch einen ringförmigen Permanentmagneten gebildet. Das erste Magnetelement und/oder das zweite Magnetelement erstrecken sich somit ringförmig um die Ansetzrichtung, wobei das erste Magnetelement und das zweite Magnetelement sich beim Ansetzen des Verschlussmoduls und der Ansetzbaugruppe aneinander magnetisch anziehend gegenüberstehen und das Verbinden somit magnetisch unterstützen. Durch ringförmige Ausgestaltung kann eine Positionierung des Verschlussmoduls und der Ansetzbaugruppe zueinander beim Ansetzen erleichtert werden. Insbesondere, wenn sowohl das erste Magnetelement und das zweite Magnetelement jeweils durch einen ringförmigen Permanentmagneten gebildet sind, ermöglichen die Magnetelemente eine selbsttätige Positionierung des Verschlussmoduls zu der Ansetzbaugruppe in einer Ebene quer zur Ansetzrichtung, sodass das Verschlussmodul und die Ansetzbaugruppe zum Verbinden der Baugruppen lagerichtig miteinander in Anlage gebracht werden können.

Durch Ausbildung des ersten Magnetelements und/oder des zweiten Magnetelements durch (je) einen ringförmigen Permanentmagneten ergibt sich eine vorteilhafte Positionierwirkung dadurch, dass ein vergleichsweise geringer Querversatz zwischen den Magnetelementen eine vergleichsweise große magnetische Querkraft zwischen den Magnetelementen bewirkt. Weil die Überdeckung in radialer Richtung über eine vergleichsweise kleine Strecke (entsprechend der radialen Dicke der ringförmigen Permanentmagnete) erfolgt, ist die Kraftänderung bei Versatz der Magnetelemente radial zueinander vergleichsweise groß, was bewirkt, dass die Magnetelemente bei einem Versatz aufgrund der magnetischen Anziehungskräfte selbsttätig so positioniert werden, dass sie in Querrichtung in Deckung zueinander sind und sich somit überdeckend gegenüberliegen.

Sind das erste Magnetelement und/oder das zweite Magnetelement ringförmig ausgebildet, können das erste Magnetelement und/oder das zweite Magnetelement ringförmig geschlossen oder auch an einer oder mehreren Stellen umfänglich geöffnet sein. Im Querschnitt können das erste Magnetelement und/oder das zweite Magnetelement hierbei rund, insbesondere kreisförmig, oder mehreckig, zum Beispiel viereckig, ausgebildet sein.

Offenbart ist weiterhin eine Verbindungsvorrichtung zum lösbaren Verbinden zweier Baugruppen. Die Verbindungsvorrichtung umfasst ein Verschlussmodul, das einer ersten der Baugruppen zugeordnet ist und eine Gehäusebaugruppe, ein an der Gehäusebaugruppe verstellbar angeordnetes Verstellelement und ein Unterdruckelement aufweist. Die Verbindungsvorrichtung umfasst zudem eine Ansetzbaugruppe, die einer zweiten der Baugruppen zugeordnet ist. Das Unterdruckelement ist entlang einer Ansetzrichtung mit der Ansetzbaugruppe verbindbar und wirkt in einer verbundenen Stellung derart mit der Ansetzbaugruppe zusammen, dass bei Belastung des Verschlussmoduls und der Ansetzbaugruppe relativ zueinander das Unterdruckelement und die Ansetzbaugruppe aufgrund einer Unterdruckwirkung zwischen dem Unterdruckelement und der Ansetzbaugruppe aneinandergehalten sind. Das Verstellelement ist zum Lösen des Unterdruckelements von der Ansetzbaugruppe relativ zu der Gehäusebaugruppe verstellbar, um eine Strömungsöffnung in der Gehäusebaugruppe für einen Zustrom von Luft in einen zwischen dem Unterdruckelement und der Ansetzbaugruppe vorhandenen Raum freizugeben. Hierbei ist vorgesehen, dass das Verschlussmodul ein erstes Magnetelement und die Ansetzbaugruppe ein zweites Magnetelement aufweisen, wobei das erste Magnetelement und das zweite Magnetelement sich in der verbundenen Stellung magnetisch anziehend gegenüberstehen und das erste Magnetelement und/oder das zweite Magnetelement durch einen ringförmigen Permanentmagneten gebildet sind.

Das erste Magnetelement und/oder das zweite Magnetelement erstrecken sich somit ringförmig um die Ansetzrichtung, wobei das erste Magnetelement und das zweite Magnetelement sich beim Ansetzen des Verschlussmoduls und der Ansetzbaugruppe aneinander magnetisch anziehend gegenüberstehen und das Verbinden somit magnetisch unterstützen. Durch ringförmige Ausgestaltung kann eine Positionierung des Verschlussmoduls und der Ansetzbaugruppe zueinander beim Ansetzen erleichtert werden. Insbesondere, wenn sowohl das erste Magnetelement und das zweite Magnetelement jeweils durch einen ringförmigen Permanentmagneten gebildet sind, ermöglichen die Magnetelemente eine selbsttätige Positionierung des Verschlussmoduls zu der Ansetzbaugruppe in einer Ebene quer zur Ansetzrichtung, sodass das Verschlussmodul und die Ansetzbaugruppe zum Verbinden der Baugruppen miteinander lagerichtig miteinander in Anlage gebracht werden können.

Das erste Magnetelement und/oder das zweite Magnetelement sind ringförmig ausgebildet, wobei das erste Magnetelement und/oder das zweite Magnetelement ringförmig geschlossen oder auch an einer oder mehreren Stellen umfänglich geöffnet sein können. Im Querschnitt können das erste Magnetelement und/oder das zweite Magnetelement hierbei rund, insbesondere kreisförmig, oder mehreckig, zum Beispiel viereckig, ausgebildet sein.

Das erste Magnetelement kann, in einer Ausgestaltung, beispielsweise an einem Boden der Gehäusebaugruppe angeordnet sein. Die Strömungsöffnung kann hierbei beispielsweise radial innerhalb des ersten Magnetelements in dem Boden gebildet sein. Eine Verbindungsvorrichtung dieser Art ist kombinierbar mit den unterschiedlichen Aspekten und Ausgestaltungen, wie sie vorangehend beschrieben worden sind. Eine solche Verbindungsvorrichtung kann insbesondere mit einem Verstellelement ausgestaltet sein, das um unterschiedliche Raumrichtungen relativ zu der Gehäusebaugruppe verkippbar ist, wobei eine solche Verbindungvorrichtung aber auch ein anders geartetes Verstellelement aufweisen kann.

Weiterhin offenbart ist ein Verschlussmodul einer Verbindungsvorrichtung, die zum lösbaren Verbinden zweier Baugruppen dient, welches einer ersten der Baugruppen zugeordnet und an eine einer zweiten der Baugruppen zugeordnete Ansetzbaugruppe ansetzbar ist.

Das Verschlussmodul umfasst eine Gehäusebaugruppe, ein an der Gehäusebaugruppe verstellbar angeordnetes Verstellelement und ein Unterdruckelement. Das Unterdruckelement ist entlang einer Ansetzrichtung mit der Ansetzbaugruppe verbindbar und ist ausgestaltet, in einer verbundenen Stellung derart mit der Ansetzbaugruppe wechselzuwirken, dass bei Belastung des Verschlussmoduls und der Ansetzbaugruppe relativ zueinander das Unterdruckelement und die Ansetzbaugruppe aufgrund einer Unterdruckwirkung zwischen dem Unterdruckelement und der Ansetzbaugruppe aneinandergehalten sind. Das Verstellelement ist zum Lösen des Unterdruckelements von der Ansetzbaugruppe relativ zu der Gehäusebaugruppe verstellbar, um eine Strömungsöffnung in der Gehäusebaugruppe für einen Zustrom von Luft in einen zwischen dem Unterdruckelement und der Ansetzbaugruppe vorhandenen Raum freizugeben. Das Verschlussmodul weist ein erstes Magnetelement auf, das ausgebildet ist, mit einem zweiten Magnetelement der Ansetzbaugruppe magnetisch zusammen zu wirken, wobei das erste Magnetelement durch einen ringförmigen Permanentmagneten gebildet ist.

Ein solches Verschlussmodul kann insbesondere Bestandteil einer Verbindungsvorrichtung nach der vorangehend beschriebenen Art sein.

Weiterhin offenbart ist eine Ansetzbaugruppe, die die Eignung zum Verbinden mit dem Verschlussmodul der vorangehend beschriebenen Art aufweist, und die mit dem Unterdruckelement des Verschlussmoduls entlang einer Ansetzrichtung verbindbar ist. Die Ansetzbaugruppe weist ein zweites Magnetelement auf, das ausgebildet ist, mit dem ersten Magnetelement des Verschlussmoduls magnetisch zusammen zu wirken, wobei das zweite Magnetelement durch einen ringförmigen Permanentmagneten gebildet ist. Die Ansetzbaugruppe kann Bestandteil einer Verbindungsvorrichtung der vorangehend beschriebenen Art sein.

Weiterhin offenbart ist auch eine Verbindungsvorrichtung zum lösbaren Verbinden zweier Baugruppen miteinander, die ein Verschlussmodul und eine Ansetzbaugruppe aufweist. Das Verschlussmodul ist einer ersten der Baugruppen zugeordnet und weist eine Gehäusebaugruppe, ein an der Gehäusebaugruppe verstellbar angeordnetes Verstellelement und ein Unterdruckelement auf. Die Ansetzbaugruppe ist einer zweiten der Baugruppen zugeordnet. Das Unterdruckelement ist entlang einer Ansetzrichtung mit der Ansetzbaugruppe verbindbar und wirkt in einer verbundenen Stellung derart mit der Ansetzbaugruppe zusammen, dass bei Belastung des Verschlussmoduls und der Ansetzbaugruppe relativ zueinander das Unterdruckelement und die Ansetzbaugruppe aufgrund einer Unterdruckwirkung zwischen dem Unterdruckelement und der Ansetzbaugruppe aneinandergehalten sind. Das Verstellelement ist zum Lösen des Unterdruckelements von der Ansetzbaugruppe durch eine Bewegung entgegen einer Löserichtung relativ zu der Gehäusebaugruppe verstellbar, um eine Strömungsöffnung in der Gehäusebaugruppe für einen Zustrom von Luft in einen zwischen dem Unterdruckelement und der Ansetzbaugruppe vorhandenen Raum freizugeben, wobei die Ansetzbaugruppe nach dem Lösen des Unterdruckelements in die Löserichtung von dem Verschlussmodul abnehmbar ist.

Die Bedienung des Verstellelements kann vorzugsweise händisch durch einen Nutzer erfolgen, indem der Nutzer auf das Verstellelement einwirkt. Die Bedienung des Verstellelements kann hierbei beispielsweise mit den Fingerspitzen erfolgen, indem der Nutzer an dem Verstellelement drückt oder zieht und dadurch das Verstellelement bewegt.

Dadurch, dass das Verstellelement taumelnd um unterschiedliche Raumrichtungen verkippt werden kann, ist auch eine grobmotorische Betätigung, zum Beispiel unter Verwendung der Handfläche oder der Rückseite der Hand oder gegebenenfalls auch mit einem anderen Körperteil, zum Beispiel mit dem Fuß oder Ellenbogen, möglich. Weil das Verstellelement um unterschiedliche Raumrichtungen bewegt werden kann, kommt es auf eine exakte Ausführung einer bestimmten Bewegung nicht an, was ein einfaches, komfortables Betätigen der Verbindungsvorrichtung zum Öffnen ermöglicht.

Das Verstellelement kann hierbei mit einem vergleichsweise großen Hebel (radial zu einer entlang der Ansetzrichtung gerichteten zentralen Achse der Verbindungsvorrichtung) ausgeführt sein, sodass das Verstellelement leichtgängig bewegt werden kann.

Das Verstellelement kann beispielsweise einen Betätigungsabschnitt aufweisen, der sich entlang eines Kreisbogens um die Ansetzrichtung erstreckt und beispielsweise einen konstanten Radius zu einer zentralen Achse der Verbindungsvorrichtung aufweist. Der Betätigungsabschnitt kann beispielsweise einen Winkel größer 90°, beispielsweise größer 180°, beschreiben und kann einen vergleichsweise großen Hebelarm zu der zentralen Achse aufweisen. Beispielsweise kann das Verstellelement mit dem Betätigungsabschnitt die Gehäusebaugruppe radial übertragen.

Das Verstellelement kann auch durch einen die Gehäusebaugruppe radial überragenden Hebel oder Bügel ausgebildet sein.

Eine Verbindungsvorrichtung dieser Art ist ebenfalls kombinierbar mit den unterschiedlichen Aspekten und Ausgestaltungen, wie sie vorangehend beschrieben worden sind. Eine solche Verbindungsvorrichtung kann insbesondere mit einem Verstellelement ausgestaltet sein, das um unterschiedliche Raumrichtungen zu der Gehäusebaugruppe verkippbar ist, wobei eine solche Verbindungsvorrichtung aber auch ein anders geartetes Verstellelement aufweisen kann.

Die Ansetzbaugruppe kann beispielsweise mit einem elektronischen Gerät, zum Beispiel einer Handyhalterung oder dergleichen zum Halten eines Mobiltelefons, verbunden sein und kann in die Löserichtung von dem Verschlussmodul abgenommen werden, um das Elektronikgerät von dem Verschlussmodul zu lösen. Dadurch, dass das Verstellelement entgegen der Löserichtung betätigt werden kann, ergibt sich ein einfacher Löse- und Abnehmvorgang, bei dem ein Nutzer in einer Handbewegung das Verstellelement betätigen und nach Betätigung die Ansetzbaugruppe von dem Verschlussmodul abnehmen kann.

Die Verbindungsvorrichtung ist beispielsweise dazu ausgebildet, ein elektronisches Gerät an einer zugeordneten Baugruppe zu befestigen. Beispielsweise kann die Verbindungsvorrichtung dazu dienen, eine Kamera an einem Helm, zum Beispiel einem Skihelm oder einem Fahrradhelm, zu befestigen. In anderer Ausgestaltung kann die Verbindungsvorrichtung auch dazu dienen, ein Mobiltelefon oder eine Navigationsgerät oder ein anderes elektronisches Kommunikations- oder Informationsgerät in oder an einem Fahrzeug zu befestigen, beispielsweise an einer Windschutzscheibe oder an einem Armaturenbrett eines Kraftfahrzeugs oder an einer Lenkerstange eines Fahrrads oder Motorrads.

Die Ansetzbaugruppe kann hierbei zum Beispiel mit dem elektronischen Gerät verbunden oder integral mit dem elektronischen Gerät ausgebildet sein. Denkbar ist auch, die Ansetzbaugruppe mit einer Halterung für das elektronische Gerät, zum Beispiel einer Handyhalterung zum Halten eines Mobiltelefon, zu verbinden oder integral mit einer solchen Haltung auszugestalten.

In einer Ausgestaltung weist das Verschlussmodul ein oder mehrere elektrische Kontaktelemente auf, die zum elektrischen Kontaktieren mit einem oder mehreren der Ansetzbaugruppe zugeordneten Gegenkontaktelementen dienen, wenn das Verschlussmodul bei geschlossener Verbindungsvorrichtung an die Ansetzbaugruppe angesetzt ist. Über die Verbindungsvorrichtung kann somit auch eine elektrische Verbindung hergestellt werden - über eine mechanische Verbindung zum Halten von Baugruppen aneinander hinaus -, was insbesondere dann vorteilhaft sein kann, wenn über die Verbindungsvorrichtung zum Beispiel ein elektronisches Gerät an einer zugeordneten Baugruppe befestigt werden soll. In diesem Fall können über ein oder mehrere elektrische Kontaktelemente beispielsweise Ströme für eine elektrische Versorgung zum Beispiel zum Aufladen des elektronischen Geräts übertragen werden, oder es kann eine Datenverbindung zum Austausch von Datensignalen bereitgestellt werden.

Der der Erfindung zugrunde liegende Gedanke soll nachfolgend anhand der in den Figuren dargestellten Ausführungsbeispiele näher erläutert werden. Es zeigen:
- Fig. 1A: eine Explosionsansicht eines Ausführungsbeispiels einer Verbindungsvorrichtung zum Verbinden zweier Baugruppen miteinander;
- Fig. 1B: die Explosionsansichten gemäß Fig. 1A, aus anderer Perspektive;
- Fig. 2: eine vergrößerte Ansicht eines Verstellelements eines Verschlussmoduls der Verbindungsvorrichtung;
- Fig. 3: eine andere Ansicht des Verstellelements;
- Fig. 4: eine vergrößerte Ansicht eines Gehäuseteils des Verschlussmoduls der Verbindungsvorrichtung;
- Fig. 5A: eine Ansicht der Verbindungsvorrichtung in geöffneter Stellung;
- Fig. 5B: eine andere Ansicht der Verbindungsvorrichtung;
- Fig. 6: eine andere Ansicht der Verbindungsvorrichtung in geöffneter Stellung;
- Fig. 7: eine Ansicht eines Ausführungsbeispiels von Magnetelementen der Verbindungsvorrichtung;
- Fig. 8: eine Ansicht eines anderen Ausführungsbeispiels von Magnetelementen der Verbindungsvorrichtung;
- Fig. 9: eine Ansicht eines wiederum anderen Ausführungsbeispiels von Magnetelementen der Verbindungsvorrichtung;
- Fig. 10: eine Ansicht eines wiederum anderen Ausführungsbeispiels von Magnetelementen der Verbindungsvorrichtung;
- Fig. 11: eine Ansicht eines wiederum anderen Ausführungsbeispiels von Magnetelementen der Verbindungsvorrichtung;
- Fig. 12: eine Ansicht eines wiederum anderen Ausführungsbeispiels von Magnetelementen der Verbindungsvorrichtung;
- Fig. 13A: eine Ansicht der Verbindungsvorrichtung, in geöffneter Stellung;
- Fig. 13B: eine Draufsicht auf die Anordnung gemäß Fig. 13A;
- Fig. 13C: eine Schnittansicht entlang der Linie A-A gemäß Fig. 13B;
- Fig. 14A: eine Ansicht der Verbindungsvorrichtung beim Schließen;
- Fig. 14B: eine Draufsicht auf die Anordnung gemäß Fig. 14A;
- Fig. 14C: eine Schnittansicht entlang der Linie A-A gemäß Fig. 14B;
- Fig. 15A: eine Ansicht der Verbindungsvorrichtung, in verbundener Stellung;
- Fig. 15B: eine Draufsicht auf die Anordnung gemäß Fig. 15A;
- Fig. 15C: eine Schnittansicht entlang der Linie A-A gemäß Fig. 15B;
- Fig. 16A: eine Ansicht der Verbindungsvorrichtung beim Öffnen;
- Fig. 16B: eine Draufsicht auf die Anordnung gemäß Fig. 16A;
- Fig. 16C: eine Schnittansicht entlang der Linie A-A gemäß Fig. 16B;
- Fig. 17A: eine Ansicht der Verbindungsvorrichtung beim weiteren Öffnen;
- Fig. 17B: eine Draufsicht auf die Anordnung gemäß Fig. 17A;
- Fig. 17C: eine Schnittansicht entlang der Linie A-A gemäß Fig. 17B;
- Fig. 18A: eine Ansicht der Verbindungsvorrichtung in geöffneter Stellung;
- Fig. 18B: eine Draufsicht auf die Anordnung gemäß Fig. 18A;
- Fig. 18C: eine Schnittansicht entlang der Linie A-A gemäß Fig. 18B;
- Fig. 19A: eine Ansicht eines verallgemeinerten Ausführungsbeispiels eines Verschlussmoduls mit einem zu einem Gehäuseteil bewegbaren Verstellelement;
- Fig. 19B: eine Draufsicht auf die Anordnung gemäß Fig. 19A;
- Fig. 19C: eine Schnittansicht entlang der Linie A-A gemäß Fig. 19B;
- Fig. 20A: eine Ansicht der Anordnung gemäß Fig. 19A, in einer verkippten Stellung;
- Fig. 20B: eine Draufsicht auf die Anordnung gemäß Fig. 20A;
- Fig. 20C: eine Schnittansicht entlang der Linie B-B gemäß Fig. 20B;
- Fig.21A: eine Ansicht der Anordnung gemäß Fig. 19A in einer anderen Verkippstellung;
- Fig. 21B: eine Draufsicht auf die Anordnung gemäß Fig. 21A;
- Fig. 21C: eine Schnittansicht entlang der Linie C-C gemäß Fig. 21B;
- Fig. 22A: eine Ansicht der Anordnung gemäß Fig. 19A, in einer anderen Verkippstellung;
- Fig. 22B: eine Draufsicht auf die Anordnung gemäß Fig. 22A;
- Fig. 22C: eine Schnittansicht entlang der Linie D-D gemäß Fig. 22B;
- Fig. 23: eine Explosionsansicht eines weiteren Ausführungsbeispiels einer Verbindungsvorrichtung;
- Fig. 24A: eine Seitenansicht der Verbindungsvorrichtung zusammen mit einer zugeordneten Baugruppe;
- Fig. 24B: eine Schnittansicht entlang der Linie A-A gemäß Fig. 24A;
- Fig. 25: eine Ansicht eines Verstellelements eines Verschlussmoduls der Verbindungsvorrichtung;
- Fig. 26A: eine Seitenansicht des Verstellelements;
- Fig. 26B: eine Schnittansicht entlang der Linie B-B gemäß Fig. 26A;
- Fig. 27: eine Draufsicht auf das an einer Gehäusebaugruppe angeordnete Verstellelement des Verschlussmoduls;
- Fig. 28A: eine perspektivische Ansicht des Verstellelements an der Gehäusebaugruppe;
- Fig. 28B: eine vergrößerte Ansicht im Ausschnitt B gemäß Fig. 28A;
- Fig. 29A: eine Draufsicht auf die Verbindungsvorrichtung;
- Fig. 29B: eine Schnittansicht entlang der Linie A-A gemäß Fig. 29A;
- Fig. 29C: eine vergrößerte Ansicht im Ausschnitt C gemäß Fig. 29B;
- Fig. 30A: eine Ansicht des Verstellelements bei einer Betätigung entlang einer ersten Betätigungsrichtung;
- Fig. 30B: eine Schnittansicht entlang der Linie C-C gemäß Fig. 30A;
- Fig. 31A: eine Ansicht des Verstellelements bei einer Betätigung entlang einer zweiten Betätigungsrichtung;
- Fig. 31B: eine Schnittansicht entlang der Linie C-C gemäß Fig. 31A;
- Fig. 32A: eine Ansicht des Verstellelements bei einer Betätigung entlang einer dritten Betätigungsrichtung;
- Fig. 32B: eine Schnittansicht entlang der Linie C-C gemäß Fig. 32A;
- Fig. 33: eine Ansicht des Verstellelements an der Gehäusebaugruppe, darstellend die Anordnung von Lagerstellen der Gehäusebaugruppe entlang eines Kreises; und
- Fig. 34: die Schnittansicht gemäß Fig. 29B, darstellend die Verkippbarkeit des Verstellelements relativ zu der Gehäusebaugruppe entlang unterschiedlicher Betätigungsrichtungen.

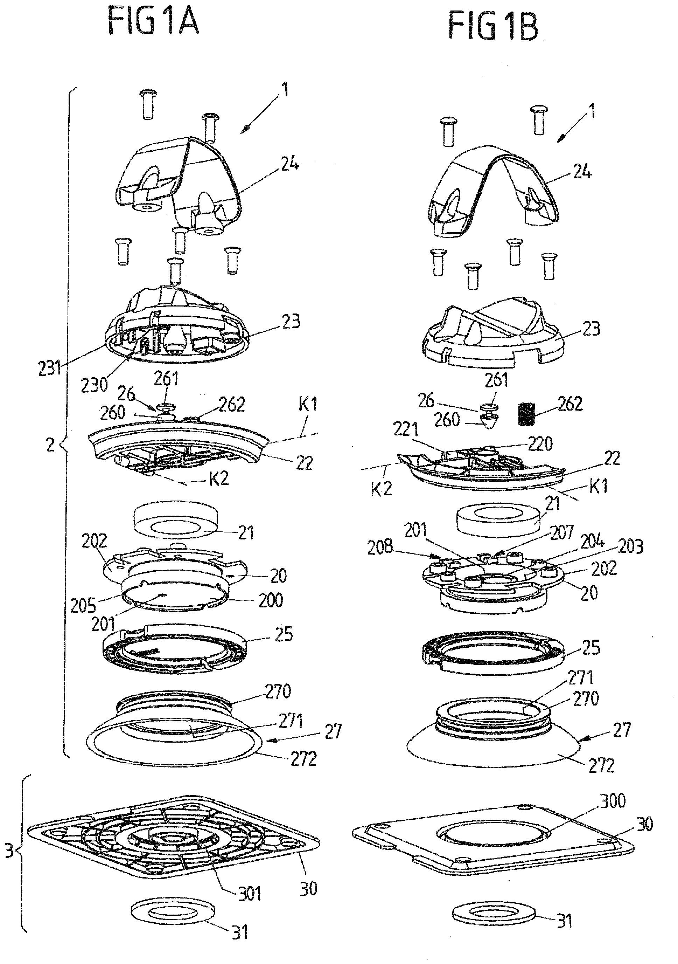

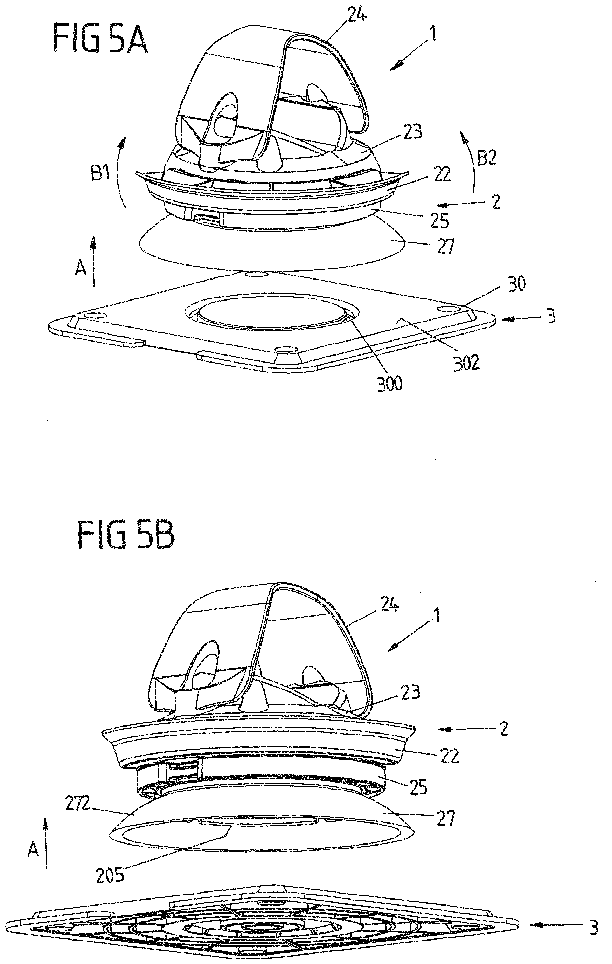

Fig. 1A, 1B bis 6 zeigen Ansichten eines Ausführungsbeispiels einer Verbindungsvorrichtung 1, die zum Verbinden zweier Baugruppen miteinander dient.

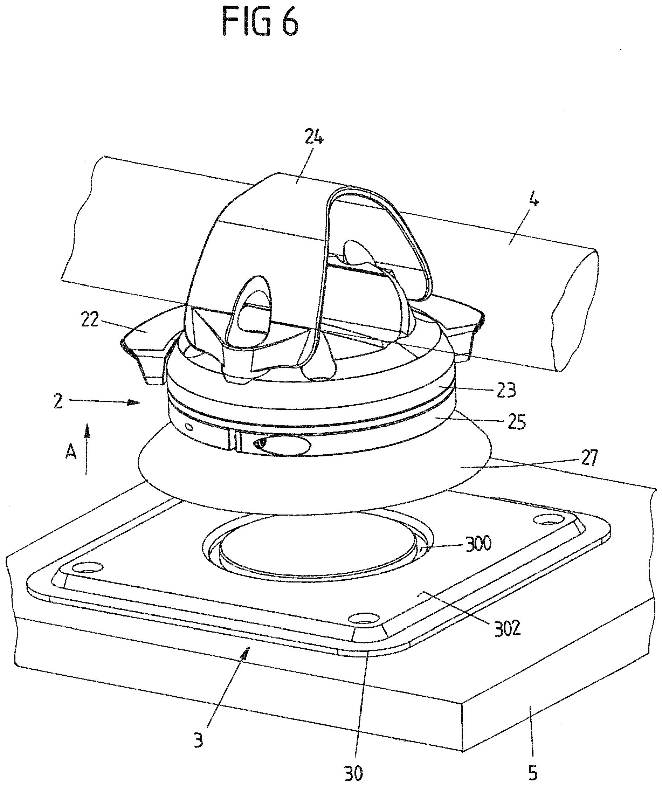

Wie aus Fig. 6 ersichtlich ist, kann eine erste Baugruppe 4, die fest mit einem Verschlussmodul 2 der Verbindungsvorrichtung 1 verbunden ist, beispielsweise durch die Lenkerstange eines Fahrrads oder eines Motorrads ausgebildet sein. Eine zweite Baugruppe 5, die mit einer Ansetzbaugruppe 3 der Verbindungsvorrichtung 1 verbunden ist, kann demgegenüber beispielsweise durch ein elektrisches oder elektronisches Gerät, zum Beispiel eine Halterung für ein Mobiltelefon, verbunden sein, sodass über die Verbindungsvorrichtung 1 ein elektrisches oder elektronisches Gerät beispielsweise an einer Lenkerstange befestigt werden kann.

Die Verbindungsvorrichtung 1 weist ein Verschlussmodul 2 auf, das zwei miteinander verbundene Gehäuseteile 20, 23 umfasst, die zwischen sich ein Verstellelement 22 aufnehmen. Mit dem Gehäuseteil 23 ist ein Befestigungsbügel 24 verbunden, über den die durch die Gehäuseteile 20, 23 gebildete Gehäusebaugruppe an einer zugeordneten Baugruppe 4, beispielsweise einer Lenkerstange, befestigt werden kann, wie dies aus Fig. 6 ersichtlich ist.

Über einen Befestigungsring 25 in Form eines Spannrings ist das Gehäuseteil 20 mit einem Unterdruckelement 27 in Form eines elastischen Elements verbunden derart, dass das Unterdruckelement 27 das Gehäuseteil 20 in einer in einem Bund 270 gebildeten Öffnung 271 aufnimmt und mit einem flexiblen Randabschnitt 272 radial gegenüber dem Bund 270 vorsteht. Das Gehäuseteil 20 liegt hierbei mit einem Boden 200 in der Öffnung 271 ein und steht mit einem Flansch 202 radial über den Bund 270 vor. Über den Flansch 202 ist das Gehäuseteil 20 fest mit dem Gehäuseteil 23 verbunden.

Innerhalb eines in dem Gehäuseteil 20 gebildeten Aufnahmeraums 203 ist ein Magnetelement 21 aufgenommen, das bei dem dargestellten Ausführungsbeispiel durch einen ringförmigen Permanentmagneten ausgebildet ist. Das Magnetelement 21 umgibt einen erhabenen Abschnitt 204 innerhalb des Aufnahmeraums 203 und ist rückwärtig des Bodens 200 innerhalb des Aufnahmeraums 203 angeordnet.

Wie nachfolgend noch erläutert werden soll, kann das Verschlussmodul 2 über das Unterdruckelement 27 an ein Ansetzteil 30 einer Ansetzbaugruppe 3 angesetzt werden, um eine Verbindung zwischen dem Verschlussmodul 2 und der Ansetzbaugruppe 3 bei Unterdruckwirkung zwischen dem Unterdruckelement 27 und dem Ansetzteil 30 herzustellen. Das Ansetzteil 30 bildet an einer Seite eine Ansetzfläche 302 aus, an die das Unterdruckelement 27 mit dem flexiblen Randabschnitt 272 angesetzt werden kann, unter Verformung des Unterdruckelements 27 und unter Minimierung eines zwischen dem Unterdruckelement 27 und dem Ansetzteil 30 gebildeten Raums und somit unter Einstellung einer Unterdruckwirkung zwischen dem Unterdruckelement 27 und dem Ansetzteil 30.

In einer Aufnahmeöffnung 301 rückseitig des Ansetzteils 30 ist ein Magnetelement 31 aufgenommen, das bei dem dargestellten Ausführungsbeispiel durch einen ringförmigen Permanentmagneten ausgebildet ist und beim Ansetzen des Verschlussmoduls 2 und der Ansetzbaugruppe 3 aneinander magnetisch anziehend mit dem Magnetelement 21 des Verschlussmoduls 2 zusammenwirkt, um das Schließen der Verbindungsvorrichtung 1 magnetisch zu unterstützen und einen Halt des Verschlussmoduls 2 und der Ansetzbaugruppe 3 aneinander zu bewirken.

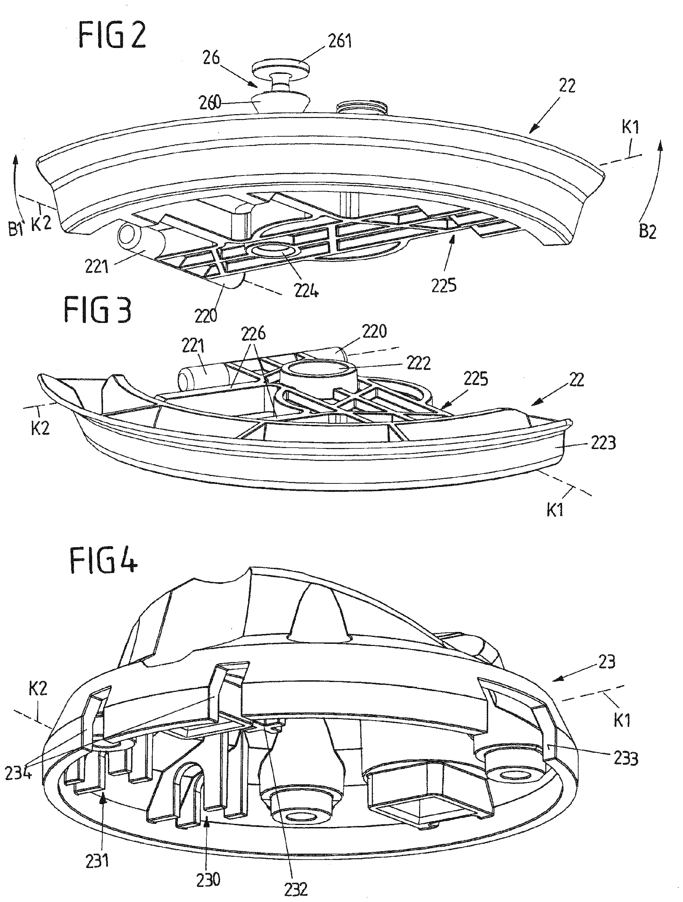

Wie aus den vergrößerten Ansichten gemäß Fig. 2 bis 4 ersichtlich, ist das Verstellelement 22 um unterschiedliche Raumrichtungen kippbar zwischen den Gehäuseteilen 20, 23 aufgenommen und dazu über Lagerzapfen 220, 221 an zugeordneten Lagerstellen 207, 208 auf Seiten des Gehäuseteils 20 (siehe Fig. 1B) und Lagerstellen 230, 231 auf Seiten des Gehäuseteils 23 (siehe Fig. 4) gelagert.

Bei dem dargestellten Ausführungsbeispiel ist das Verstellelement 22 insbesondere um unterschiedliche Kippachsen K1, K2 zu der durch die Gehäuseteile 20, 23 gebildeten Gehäusebaugruppe verkippbar. Die Lagerstellen 207, 208, 230, 231 an den Gehäuseteilen 20, 23 bilden zum einen eine Schwenklagerung um die Kippachse K2, sodass das Verstellelement 22 mittels einer Kippbewegung B2 um die Kippachse K2 verschwenkbar ist. Zudem bilden die Lagerstelle 230, 231 am Gehäuseteil 23 Langlöcher aus, die eine Bewegung der Lagerzapfen 220, 221 senkrecht in den Lagerstellen 230, 231 ermöglichen, sodass das Verstellelement 22 um eine zur Kippachse K2 senkrechte, weitere Kippachse K1 zu der durch die Gehäuseteile 20, 23 gebildeten Gehäusebaugruppe verkippbar ist.

Durch die Kipplagerung um die zueinander senkrechten Kippachsen K1, K2 ist eine beliebige Kippbewegung um eine der Kippachse K1, K2 oder eine Kombination der Kippachsen K1, K2 möglich. Ein Nutzer kann somit an einem umfänglich äußeren Betätigungsabschnitt 223 des Verstellelements 22 angreifen und das Verstellelement 22 in unterschiedlicher Weise zu der durch die Gehäuseteile 20, 23 gebildeten Gehäusebaugruppe verkippen, um auf diese Weise das Verstellelement 22 zu der Gehäusebaugruppe zu verstellen.

Bei dem dargestellten Ausführungsbeispiel erstreckt sich der Betätigungsabschnitt 223 über einen Winkel von näherungsweise 100° umfänglich an dem Verstellelement 22. Dies ist jedoch nur beispielhaft zu verstehen. Der Betätigungsabschnitt 223 kann sich auch über einen größeren Winkel erstrecken, sodass ein Betätigen des Verstellelements 22 über einen größeren Umfangswinkel (zum Beispiel größer 180°) möglich ist.

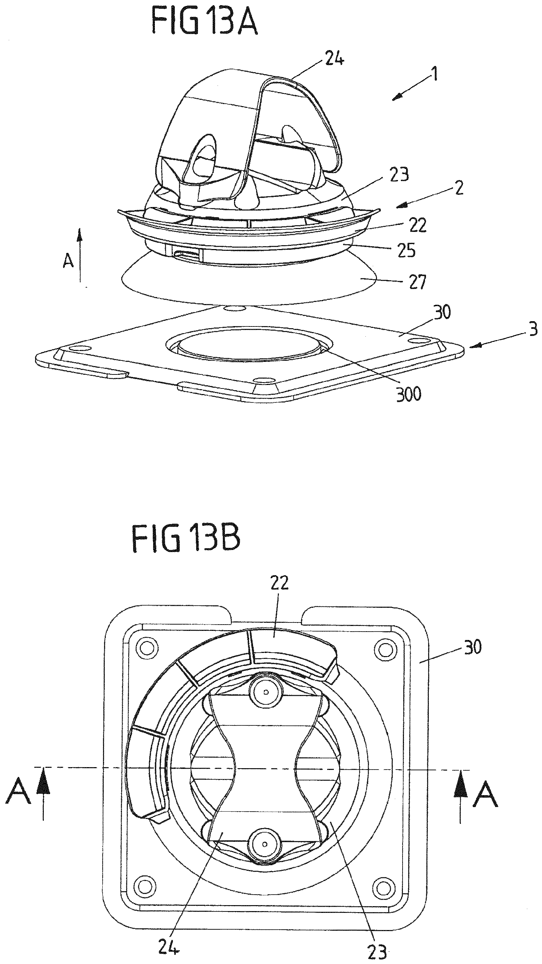

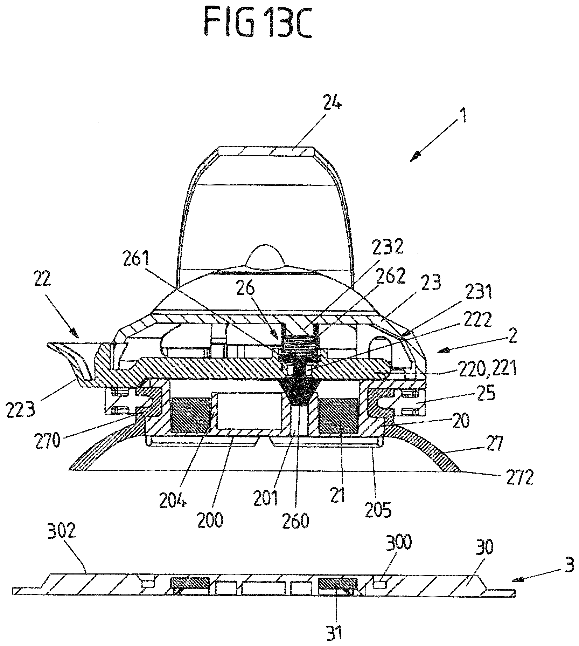

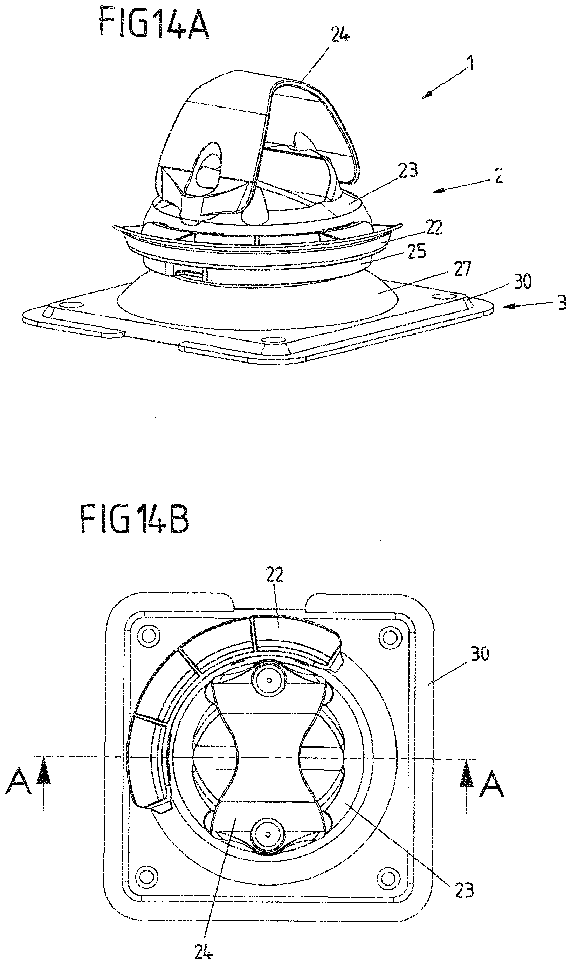

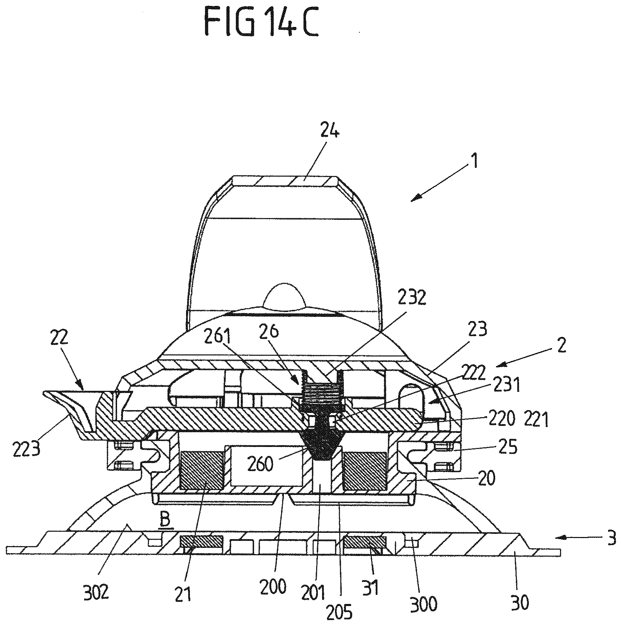

An dem Verstellelement 22 ist ein Ventilelement 26 angeordnet, das in einer Aufnahmeöffnung 222 des Verstellelements 22 gehalten ist und mit einem Ventilkopf 260 im Bereich eines Ausgangs 224 der Aufnahmeöffnung 222 angeordnet ist, sodass der Ventilkopf 260 hin zu einer Strömungsöffnung 201 im Boden 200 des Gehäuseteils 20 weist, wie dies nachfolgend noch anhand von Fig. 13A-13C bis 18A-18C erläutert werden soll. Das Ventilelement 26 dient dazu, mit dem Ventilkopf 260 die Strömungsöffnung 201 in dem Boden 200 des Gehäuseteils 20 zu verschließen, wenn sich die Verbindungsvorrichtung 1 in geschlossener, verbundener Stellung befindet, sodass ein Unterdruck zwischen dem Unterdruckelement 27 und der Ansetzbaugruppe 30 aufrechterhalten wird. Durch Verstellen des Verstellelements 22 kann das Ventilelement 26 relativ zu der Strömungsöffnung 201 bewegt werden, sodass die Strömungsöffnung 201 ganz oder teilweise freigegeben wird und somit Luft in einen Raum zwischen dem Unterdruckelement 27 und der Ansetzbaugruppe 3 einströmen kann, dadurch eine Unterdruckwirkung aufgehoben und ein Lösen des Verschlussmoduls 2 und der Ansetzbaugruppe 3 voneinander ermöglicht wird.

Bei dem dargestellten Ausführungsbeispiel ist der Betätigungsabschnitt 223 über einen Verbindungsabschnitt 225 mit den Lagerzapfen 220, 221 verbunden, wobei sich zusätzlich Querstege 226 zwischen dem Betätigungsabschnitt 223 und dem Verbindungsabschnitt 225 erstrecken. Der Verbindungsabschnitt 225 und die Querstege 226 sind in jeweils zugeordneten Öffnungen 233, 234 an einem äußeren Umfangsabschnitt des Gehäuseteils 23 aufgenommen, wie dies aus Fig. 4 ersichtlich ist, sodass das Verstellelement 22 zu dem Gehäuseteil 23 verstellbar ist.

Über ein an einem Stützabschnitt 232 des Gehäuseteils 23 abgestütztes Federelement 262 in Form einer Druckfeder ist das Verstellelement 22 gegenüber dem Gehäuseteil 23 in Richtung einer nicht betätigten Schließstellung federvorgespannt. Das Federelement 262 ist an einem Fuß 261 in der Aufnahmeöffnung 222 des Verstellelements 22 abgestützt und hält das Verstellelement 22 in einer solchen Stellung, in der der Ventilkopf 260 abdichtend in die Strömungsöffnung 201 eingreift.

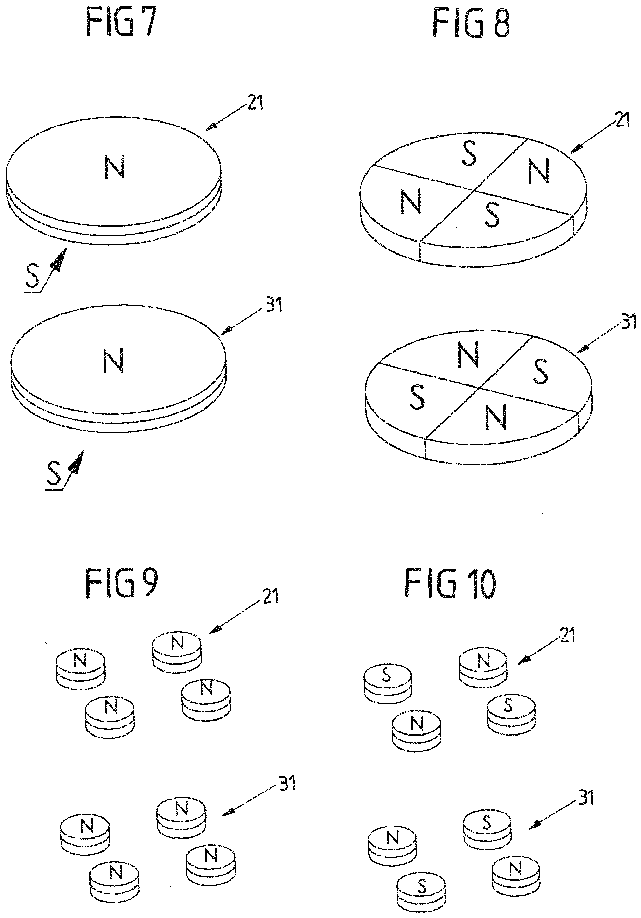

Die Magnetelemente 21, 31 sind bei dem in Fig. 1A, 1B bis 6 dargestellten Ausführungsbeispiel durch ringförmige Permanentmagnete ausgebildet. Grundsätzlich sind hierbei jedoch ganz unterschiedliche Gestaltungen für die Magnetelemente 21, 31 denkbar und möglich, wie dies nachfolgend anhand von Fig. 7 bis 12 erläutert werden soll.

In einem ersten Beispiel, dargestellt in Fig. 7, sind die Magnetelemente 21, 31 durch scheibenförmige Permanentmagnete ausgebildet, wobei die Magnetelemente 21, 31 mit ungleichnamigen Polen (N, S) aufeinander zu weisen und sich somit magnetisch anziehend gegenüberstehen, um das Schließen der Verbindungsvorrichtung 1 magnetisch zu unterstützen und das Verschlussmodul 2 in der verbundenen Stellung magnetisch anziehend an der Ansetzbaugruppe 3 zu halten.

In anderer Ausgestaltung, dargestellt in Fig. 8, können die Magnetelemente 21, 31 jeweils mehrere Magnetpole N, S aufweisen, die beispielsweise durch unterschiedliche Magnetisierungsabschnitte an den Magnetelementen 21, 31 gebildet sind. Die Magnetpole N, S sind hierbei alternierend in Umfangsrichtung aneinander angereiht.

Fig. 9 und 10 zeigen Beispiele von Magnetelementen 21, 31, die durch Anordnungen von mehreren Permanentmagneten auf jeder Seite gebildet sind. Die Permanentmagnete auf jeder Seite können hierbei, wie bei dem Beispiel gemäß Fig. 9, gleichgerichtet zueinander angeordnet sein und somit mit gleichen Polen hin zu der jeweils anderen Magnetanordnung weisen. Die Permanentmagnete auf jeder Seite können hierbei jedoch auch verdreht zueinander angeordnet sein und somit mit alternierenden Polen hin zu der jeweils anderen Magnetanordnung weisen, wie bei dem Beispiel gemäß Fig. 10.

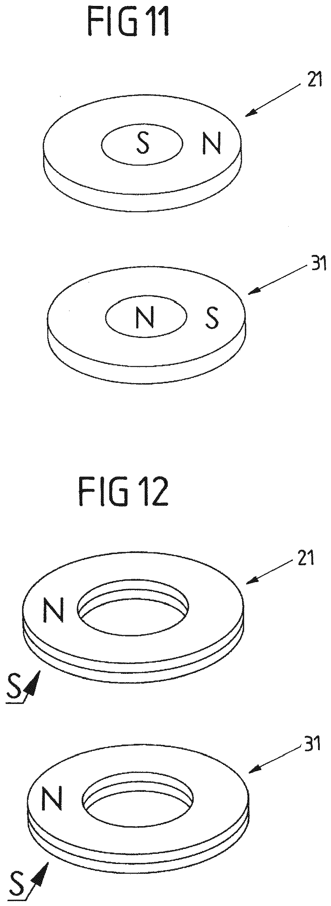

Bei dem Beispiel gemäß Fig. 11 ist an jedem Magnetelement 21, 31 ein Pol N, S radial außerhalb eines weiteren Pols S, N angeordnet. Der äußere Pol N, S umgibt den inneren Pol S, N ringförmig.

Bei dem Beispiel gemäß Fig. 12 sind die Magnetelemente 21, 31 jeweils durch ringförmige Permanentmagnete ausgebildet, die mit ungleichnamigen Polen N, S aufeinander zu weisen und somit magnetisch anziehend zusammenwirken.

Sämtliche der Beispiele gemäß Fig. 7 bis 12 sind praktikabel und vorteilhaft umsetzbar. Die Verwendung eines ringförmigen Magnetelements 21, 31, wie bei dem Beispiel gemäß Fig. 12, kann gegebenenfalls den Vorteil aufweisen, dass das Verschlussmodul 2 und die Ansetzbaugruppe 3 in günstiger Weise insbesondere in einer quer zu einer Ansetzrichtung A gerichteten Ebene in einfacher Weise zueinander positioniert werden können, wobei die magnetische Anziehung der Magnetelemente 21, 31 bewirkt, dass das Verschlussmodul 2 und die Ansetzbaugruppe 3 selbsttätig in richtiger Lage aneinander angezogen und zueinander positioniert werden.

Unter Bezugnahme auf Fig. 13A-13C bis 18A-18C soll nachfolgend die Handhabung der Verbindungsvorrichtung 1 zum Schließen und Öffnen erläutert werden.

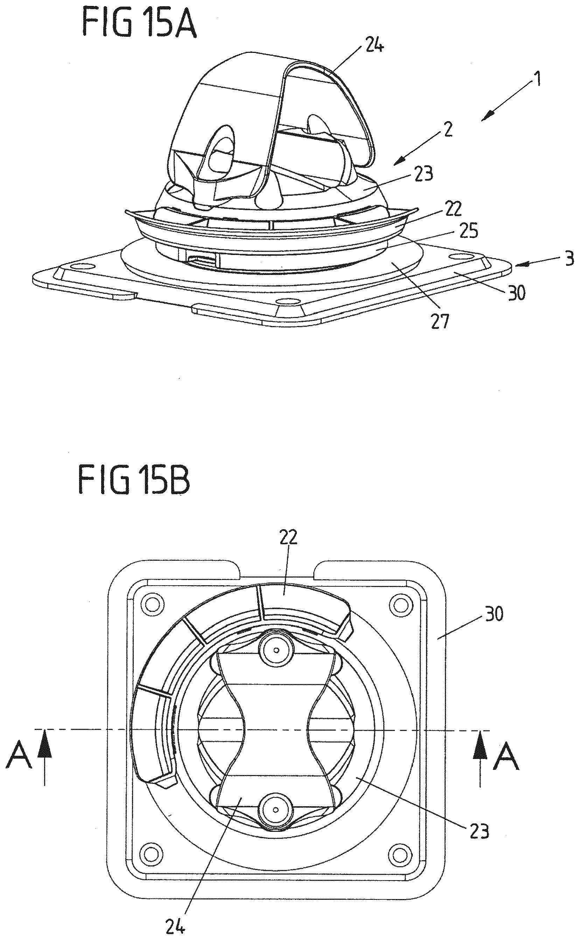

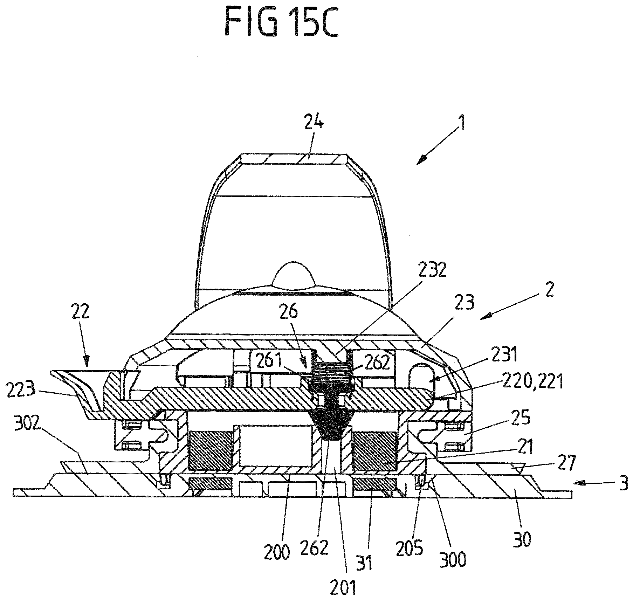

Zum Schließen der Verbindungsvorrichtung 1 werden das Verschlussmodul 2 und die Ansetzbaugruppe 3 entlang einer Ansetzrichtung A aneinander angesetzt, wie dies im Übergang von Fig. 13A-13C hin zu Fig. 15A-15C ersichtlich ist. Das Unterdruckelement 27 gelangt hierbei mit der Ansetzfläche 302 am Ansetzteil 30 in Anlage, unter elastischer Verformung des flexiblen Randabschnitts 272 des Unterdruckelements 27, wie dies insbesondere aus Fig. 15C ersichtlich ist.

Beim Ansetzen des Verschlussmoduls 2 und der Ansetzbaugruppe 3 aneinander gelangt ein Formschlussabschnitt 205 am Boden 200 des Gehäuseteils 20 des Verschlussmoduls 2 in Eingriff mit einem zugeordneten Formschlussabschnitt 300 am Ansetzteil 30 der Ansetzbaugruppe 3. Der Formschlussabschnitt 205 ist durch einen ringförmigen, vom Boden 200 vorstehenden Steg gebildet, der in der verbundenen Stellung in den Formschlussabschnitt 300 in Form einer ringförmigen Nut auf Seiten des Ansetzteils 30 eingreift. Durch diesen Eingriff können insbesondere Querkräfte zwischen dem Verschlussmodul 2 und dem Ansetzteil 30 aufgenommen werden, sodass das Verschlussmodul 2 und die Ansetzbaugruppe 3 quer zueinander abgestützt sind.

Durch die Formschlussabschnitte 205, 300 wird zudem eine exakte Positionierung des Verschlussmoduls 2 und der Ansetzbaugruppe 3 zueinander beim Ansetzen gewährleistet.

In der in Fig. 15A-15C dargestellten, verbundenen Stellung der Verbindungsvorrichtung 1 ist ein Raum B zwischen dem Unterdruckelement 27 und dem Ansetzteil 30 minimiert. Hierdurch besteht eine Unterdruckwirkung zwischen dem Unterdruckelement 27 und dem Ansetzteil 30, zusätzlich zu einer magnetischen Anziehung zwischen den Magnetelementen 21, 31, die sich in der verbundenen Stellung unmittelbar gegenüberstehen und somit zum Halten des Verschlussmoduls 2 und des Ansetzteils 30 magnetisch anziehend zusammenwirken.

Wie aus Fig. 15C ersichtlich, verschließt in der verbundenen Stellung das Ventilelement 26 mit dem Ventilkopf 262 die Strömungsöffnung 201 im Boden des Gehäuseteils 20, sodass keine Luft in einen Raum zwischen dem Verschlusselement 27 und dem Ansetzteil 30 einströmen kann. Das Verschlussmodul 2 und die Ansetzbaugruppe 3 werden somit sicher und zuverlässig aneinandergehalten, wobei durch die Unterdruckwirkung insbesondere auch Stoßbelastungen sicher aufgenommen und abgefangen werden können.

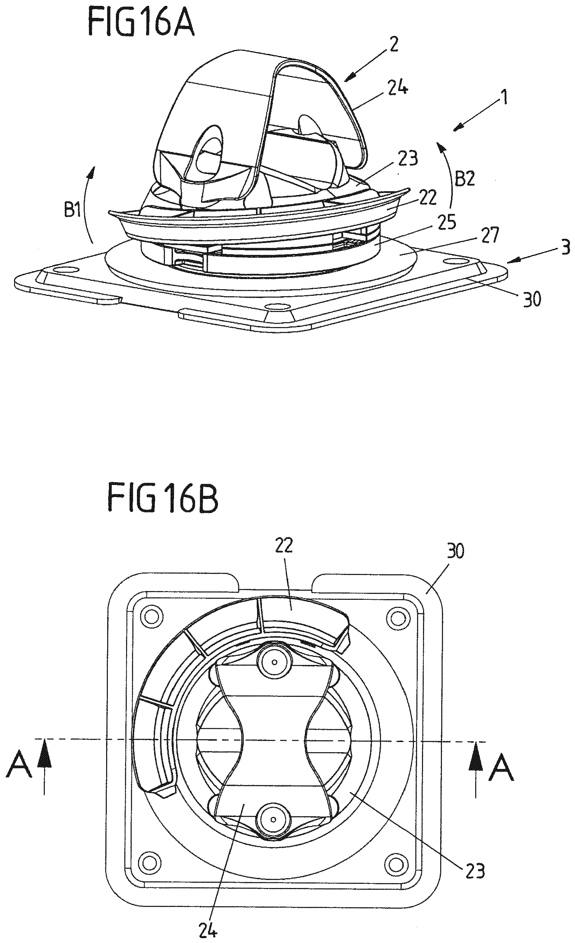

Zum Öffnen der Verbindungsvorrichtung 1 kann das Verstellelement 22 um unterschiedliche Raumrichtungen zu der durch die Gehäuseteile 20, 23 gebildeten Gehäusebaugruppe verschwenkt werden, wie dies aus Fig. 16A-16C ersichtlich ist. Ein solches Verkippen mittels einer Kippbewegung B1, B2 kann um eine der Kippachsen K1, K2 oder um eine Kombination der Kippachsen K1, K2 zum Beispiel durch mittiges Angreifen an dem Betätigungsabschnitt 223 des Verstellelements 22 bewirkt werden.

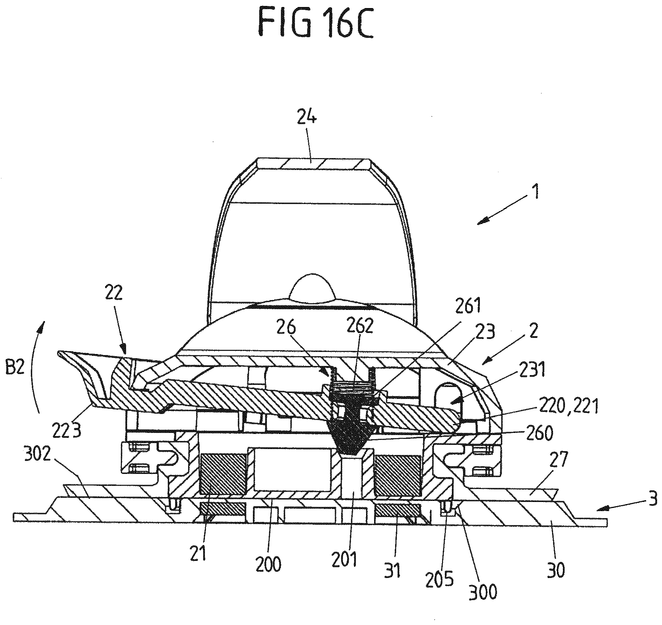

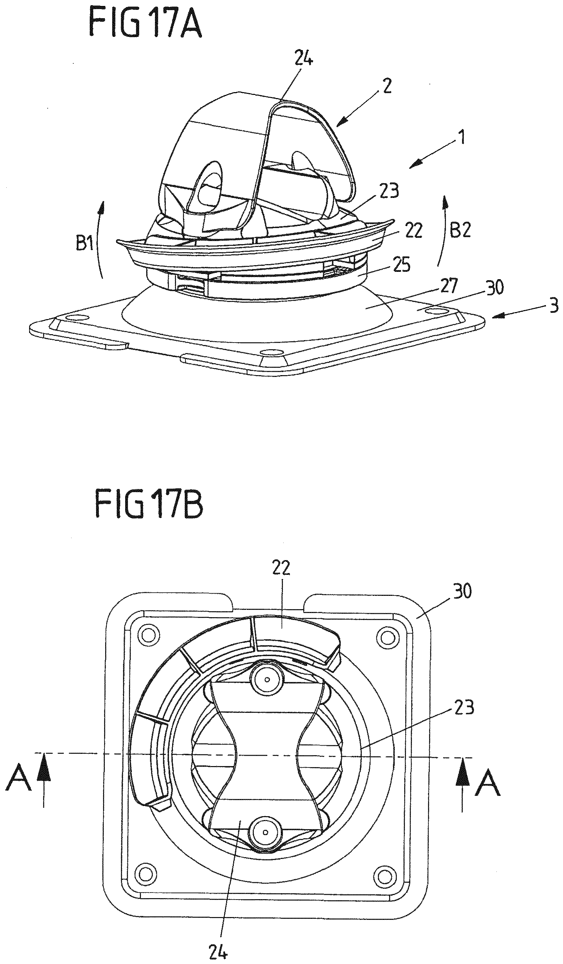

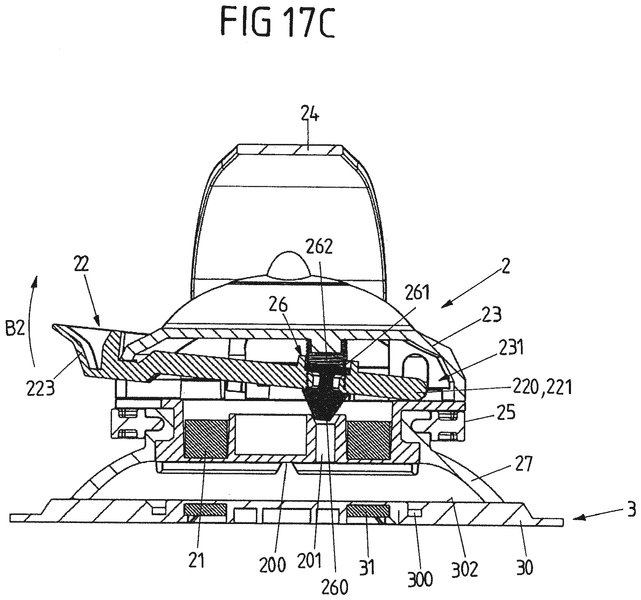

Wie aus Fig. 16C ersichtlich ist, wird durch das Verkippen des Verstellelements 22 das Ventilelement 26 mitgenommen und der Ventilkopf 260 zu der Strömungsöffnung 201 bewegt, sodass die Strömungsöffnung 201 teilweise freigegeben wird und somit Luft in einen Raum B zwischen dem Unterdruckelement 27 und dem Ansetzteil 30 einströmen kann, wie dies im Übergang von Fig. 16A-16C hin zu Fig. 17A-17C ersichtlich ist. Der Raum B wird somit vergrößert, und eine Unterdruckwirkung zwischen dem Unterdruckelement 27 und dem Ansetzteil 30 wird aufgehoben, sodass das Verschlussmodul 2 und die Ansetzbaugruppe 3 in einfacher Weise voneinander gelöst werden können.

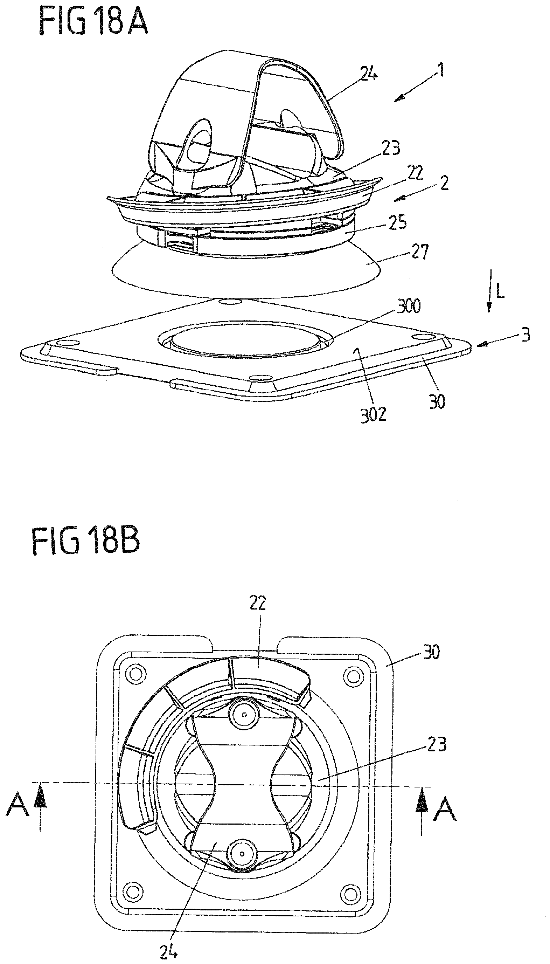

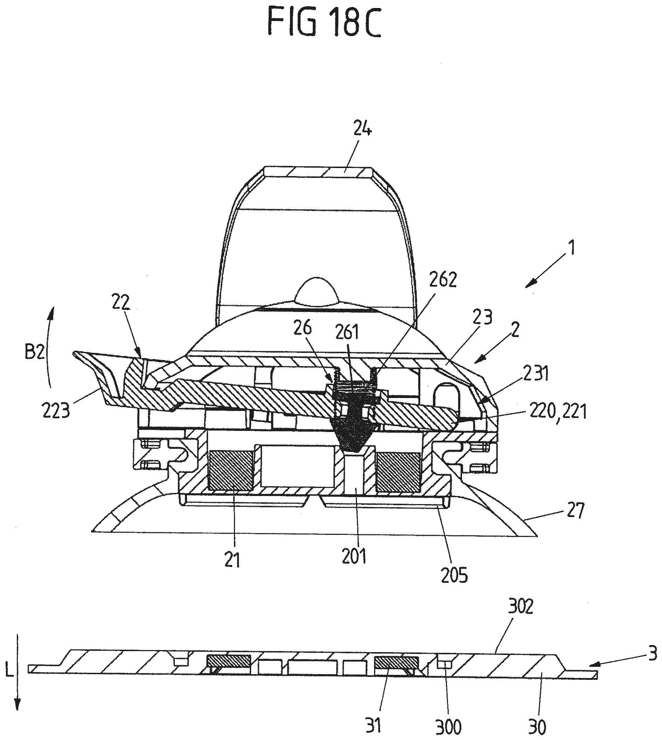

Das Abnehmen der Ansetzbaugruppe 3 von dem Verschlussmodul 2 kann in eine Löserichtung L erfolgen, wie dies in Fig. 18A-18C ersichtlich ist. Das Lösen in die Löserichtung L erfolgt entgegen einer Betätigungsrichtung des Verstellelements 22, was das Betätigen des Verstellelements 22 und das anschließende Abnehmen der Ansetzbaugruppe 3 von dem Verschlussmodul 2 für einen Nutzer einfach und komfortabel gestaltet, insbesondere um beispielsweise ein elektronisches Gerät von einer zugeordneten Baugruppe, zum Beispiel von der Lenkerstange eines Fahrrads, zu lösen.

Nach erfolgter Betätigung Verstellelements 22 kann ein Nutzer das Verstellelement 22 loslassen, wodurch das Verstellelements 22 aufgrund der Federvorspannung des Federelements 262 selbsttätig zurück in seiner Ausgangsstellung gelang, in der die Strömungsöffnung 201 durch das Ventilelement 26 verschlossen ist, entsprechend der Stellung gemäß Fig. 13A-13C.

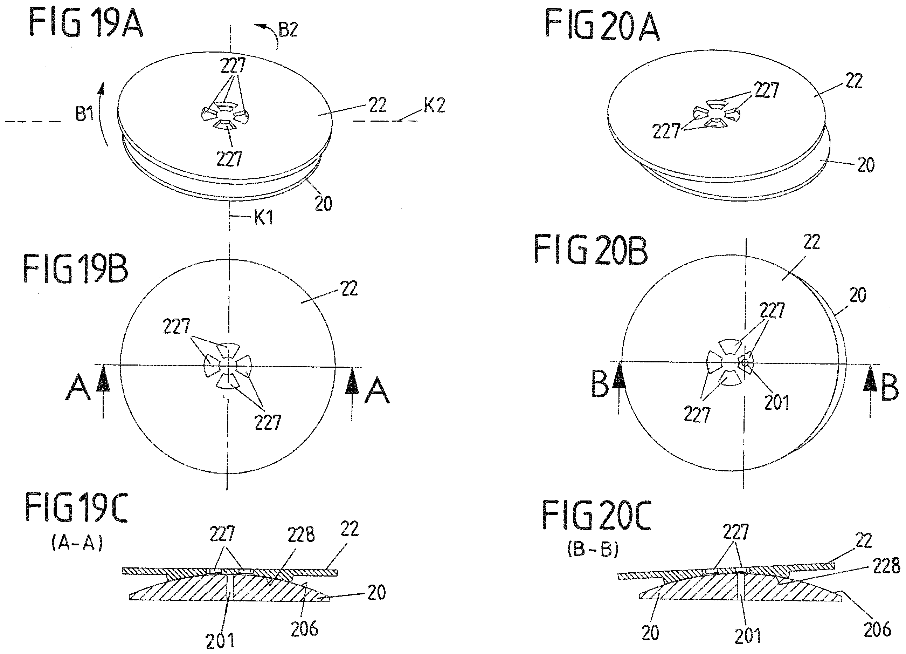

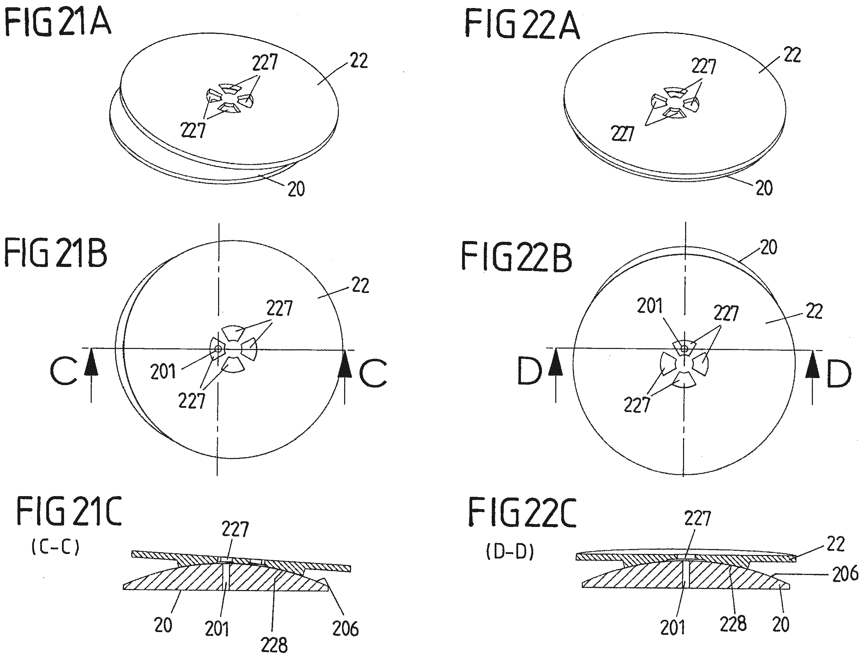

Bei dem vorangehend beschriebenen Ausführungsbeispiel der Verbindungsvorrichtung 1 ist das Verstellelement 22 um Kippachsen K1, K2 zu einer durch die Gehäuseteile 20, 23 gebildeten Gehäusebaugruppe verkippbar. Eine solche verkippbare Lagerung kann allgemein, wie in Fig. 19A-19C bis Fig. 22A-22C dargestellt ist, durch eine taumelnde Lagerung des Verstellelements 22 an einem zugeordneten Gehäuseteil 20 bereitgestellt werden. Unter einer solchen taumelnden Lagerung ist zu verstehen, dass die Lagerung ein Verkippen um unterschiedliche Raumrichtungen und eine kombinierte Kippbewegung ermöglicht, also keine definierte Schwenklagerung um eine definierte Schwenkachse bereitstellt.

So kann, wie bei dem verallgemeinerten Beispiel gemäß Fig. 19A-19C bis Fig. 22A-22C, das Verstellelement 22 über eine gekrümmte Lagerfläche 228 an einer komplementären Lagerfläche 206 des Gehäuseteils 20 gelagert sein, sodass eine Bewegung des Verstellelements 22 entlang der gekrümmten Flächen 206, 228 zueinander möglich ist.

Auf diese Weise können Öffnungen 227 am Verstellelement 22 mit einer Strömungsöffnung 201 am Gehäuseteil 20 in Deckung gebracht werden, wie dies aus Fig. 20A-20C bis Fig. 22A-22C ersichtlich ist, um auf diese Weise einen Strömungsweg zu öffnen und ein Einströmen von Luft in einen Raum zwischen einem Unterdruckelement und einem zugeordneten Ansetzteil zu ermöglichen.

Auch bei dem verallgemeinerten Beispiel gemäß Fig. 19A-19C bis Fig. 22A-22C ist ein Verkippen des Verstellelements 22 um unterschiedliche, Kippachsen K1, K2 entsprechende Raumrichtungen zu dem zugeordneten Gehäuseteil 20 möglich, wobei in diesem Fall ein Verkippen über eine Gleitlagerung über die gekrümmten Lagerflächen 206, 228 ermöglicht wird.

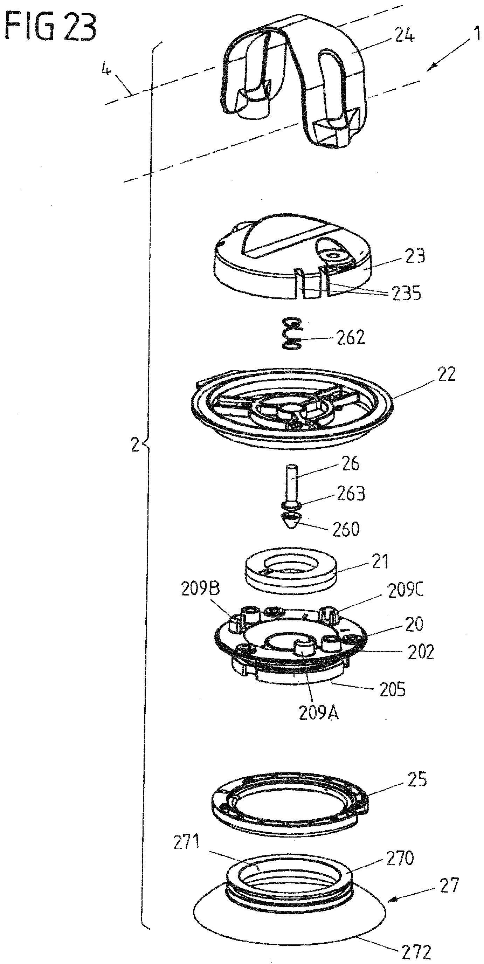

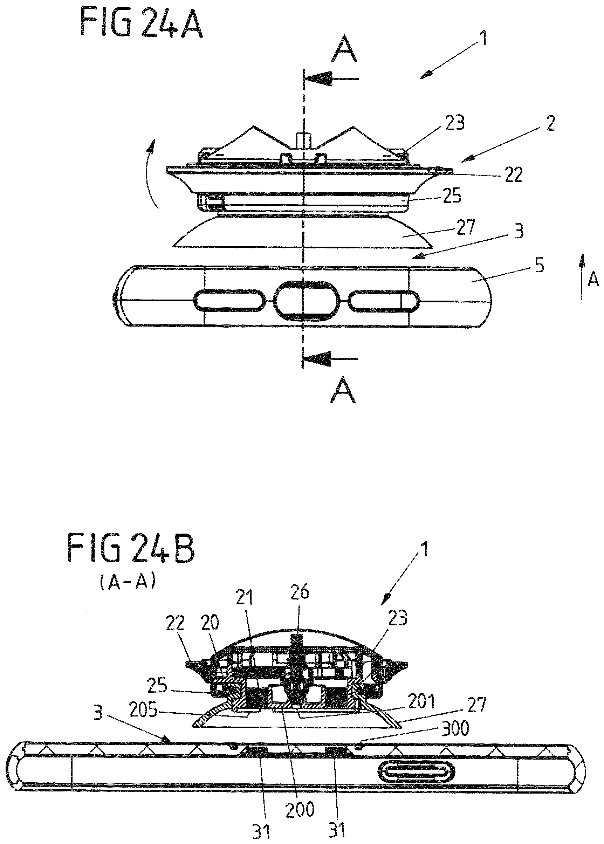

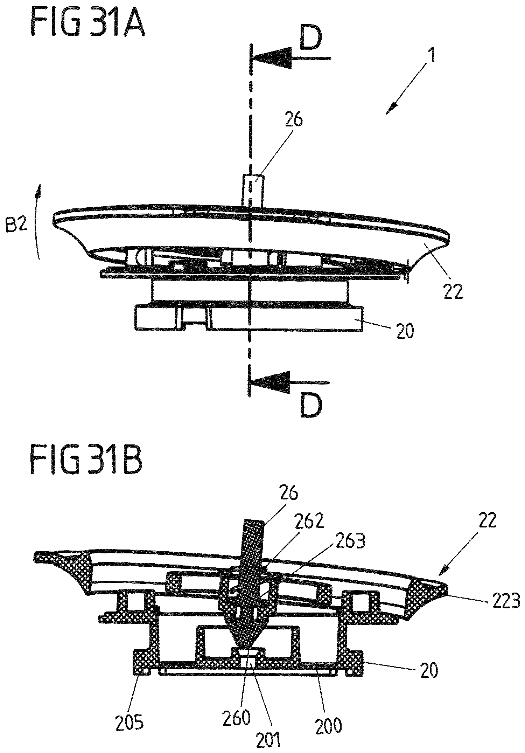

Bei einem in Fig. 23 bis 34 dargestellten Ausführungsbeispiel weist eine Verbindungsvorrichtung 1 ein Verschlussmodul 2 auf, das an eine Ansetzbaugruppe 3 an einer zugeordneten Baugruppe 5 angesetzt werden kann, wie dies beispielsweise in Fig. 24A, 24B dargestellt ist.

Analog, wie dies vorangehend beispielsweise für das Ausführungsbeispiel gemäß Fig. 1 bis 6 beschrieben worden ist, weist das Verschlussmodul 2 eine Gehäusebaugruppe auf, die durch Gehäuseteile 20, 23 gebildet ist, die fest mit einander verbunden, zum Beispiel verschraubt sind. An der Gehäusebaugruppe ist ein Verstellelement 22 gelagert, das teilweise zwischen den Gehäuseteilen 20, 23 eingefasst und dazu mit Stegen 226 durch Ausnehmungen 235 in dem Gehäuseteil 23 hindurch erstreckt ist und zudem an Lagerstellen 209A-209C am Gehäuseteil 20 abgestützt ist.

Über einen Befestigungsring 25 in Form eines Spannrings ist ein Unterdruckelement 27 mit dem Gehäuseteil 20 verbunden. Das Unterdruckelement 27 kann mit einem flexiblen Randabschnitt 272 an die Ansetzbaugruppe 3 der Baugruppe 5 angesetzt werden und ist in angesetzter Stellung unter Unterdruckwirkung an der Ansetzbaugruppe 3 gehalten. Über einen Bund 270 ist das Unterdruckelement 27 mit dem Gehäuseteil 20 durch spannende Wirkung des Befestigungsrings 25 fest verbunden, wobei das Gehäuseteil 20 in einer Öffnung 271 des Unterdruckelements 27 einliegt und mit einem Boden 200 der Ansetzbaugruppe 3 zugewandt ist, wenn das Verschlussmodul 2 und die Ansetzbaugruppe 3 aneinander angesetzt werden, wie sich dies zum Beispiel aus Fig. 24A und 24B ergibt.

An dem Verstellelement 22 ist ein Ventilelement 26 angeordnet, das mit einem Ventilkopf 260 hin zum Boden 200 des Gehäuseteils 20 weist und in einer nicht betätigten Stellung des Verstellelements 22 eine Strömungsöffnung 201 in dem Boden 200 verschließt, sodass Luft nicht in einen Raum zwischen dem Unterdruckelement 27 und der Ansetzbaugruppe 3 eindringen kann, wenn das Verschlussmodul 2 an die Ansetzbaugruppe 3 angesetzt ist, analog wie dies vorangehend beschrieben worden ist.

Das Ventilelement 26 liegt in einer zentralen Aufnahmeöffnung 222 am Verstellelement 22 ein und ist über einen Kopplungsabschnitt 263 so mit dem Verstellelement 22 gekoppelt, dass das Ventilelement 26 bei einem Verstellen des Verstellelements 22 zusammen mit dem Verstellelement 22 bewegt und dadurch aus seinem verschließenden Eingriff mit der Strömungsöffnung 201 gebracht wird. Durch Verstellen des Verstellelements 22 kann die Strömungsöffnung 201 im Boden 200 des Gehäuseteils 20 somit freigegeben werden, sodass die Unterdruckwirkung zwischen dem Verschlussmodul 2 und der Ansetzbaugruppe 3 zum Lösen der Ansetzbaugruppe 3 von dem Verschlussmodul 2 aufgehoben werden kann.

Über ein Federelement 262 ist das Ventilelement 26 gegenüber dem Gehäuseteil 23 federelastisch abgestützt. Das Federelemente 262 spannt das Ventilelement 26 somit in Richtung des Verstellelements 22 vor, wobei ein Verstellen des Verstellelements 22 auch entgegen der federelastischen Wirkung des Federelements 262 erfolgt und das Verstellelement 22 nach einer Betätigung aufgrund der Federwirkung in die nicht betätigte Stellung, entsprechend der Stellung gemäß Fig. 24A, 24B, zurückgestellt wird.

In einem Aufnahmeraum 203 an dem Gehäuseteil 20 ist ein Magnetelement 21 in Form eines ringförmigen Permanentmagneten aufgenommen. Zudem weist auch die Ansetzbaugruppe 3 ein Magnetelement 31 in Form eines ringförmigen Permanentmagneten auf, wie dies aus Fig. 24B ersichtlich ist. Die Magnetelemente 21, 31 wirken beim Ansetzen des Verschlussmoduls 2 und der Ansetzbaugruppe 3 aneinander magnetisch anziehend zusammen, um das Unterdruckelement 27 zu verformen und dadurch einen Unterdruck zwischen dem Unterdruckelement 27 und der Ansetzbaugruppe 3 zu bewirken.

Wie aus Fig. 24B ersichtlich ist, weist die Ansetzbaugruppe 3 einen Formschlussabschnitt 300 in Form einer Nut auf, in die das Verschlussmodul 2 mit einem Formschlussabschnitt 205 am Boden 200 des Gehäuseteils 20 eingesetzt werden kann, um das Verschlussmodul 2 und die Ansetzbaugruppe 3 aneinander zu positionieren und zusätzlich zur Unterdruckwirkung und zur magnetischen Anziehung über die Magnetelemente 21, 31 eine Abstützung insbesondere gegenüber Scherkräften quer zur Ansetzrichtung A bereitzustellen.

Die Ansetzbaugruppe 3 kann in die Baugruppe 5, beispielsweise in Form eines elektrischen Geräts oder einer Hülle eines solchen Geräts, zum Beispiel einer Mobiltelefonhülle, integriert sein. In diesem Fall ist das Magnetelement 31 in die Baugruppe 5 integriert und der Formschlussabschnitt 300 in die Baugruppe 5, beispielsweise die Mobiltelefonhülle, eingeformt.

Über einen Befestigungsbügel 24, der fest mit dem Gehäuseteil 23 der Gehäusebaugruppe verbunden werden kann, kann das Verschlussmodul 2 an einer zugeordneten Baugruppe 4, zum Beispiel einem Fahrradlenker, befestigt werden.

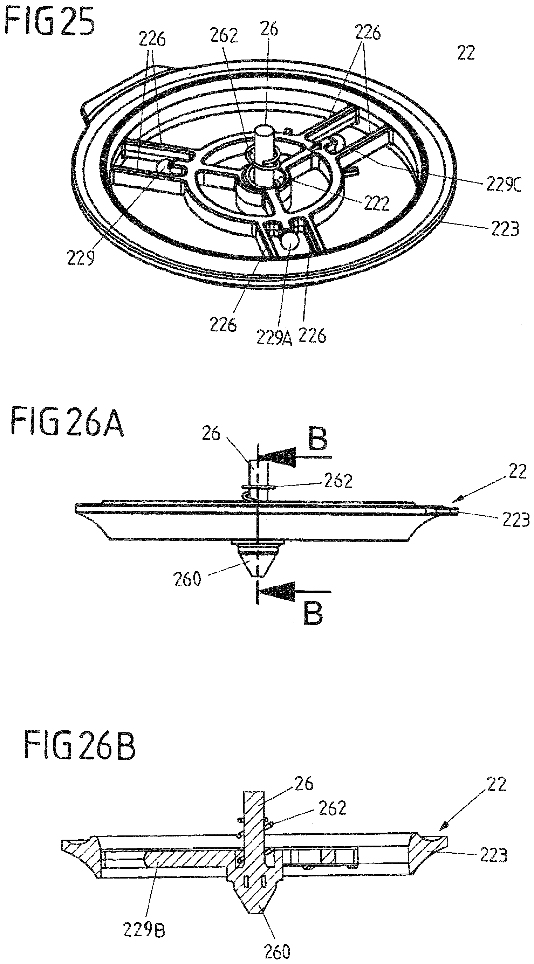

Bei dem Ausführungsbeispiel gemäß Fig. 23 bis 34 erfolgt die Lagerung des Verstellelements 22 an der Gehäusebaugruppe durch Lagerzapfen 229A, 229B, 229C, die an ihren radial äußeren Enden ballig geformt und jeweils zwischen zwei radial erstreckten Stegen 226 des Verstellelements 22 angeordnet sind, wie dies zum Beispiel aus Fig. 25 ersichtlich ist. Ein jeder Lagerzapfen 229A, 229B, 229C ist an einer zugeordneten Lagerstelle 209A, 209B, 209C des Gehäuseteils 20 abgestützt derart, dass ein jeder Lagerzapfen 229A, 229B, 229C sowohl an der zugeordneten Lagerstelle 209A, 209B, 209C verkippbar als auch längs entlang einer senkrecht zur Ebene des Gehäuseteils 20 gerichteten Verstellrichtung verschiebbar ist.

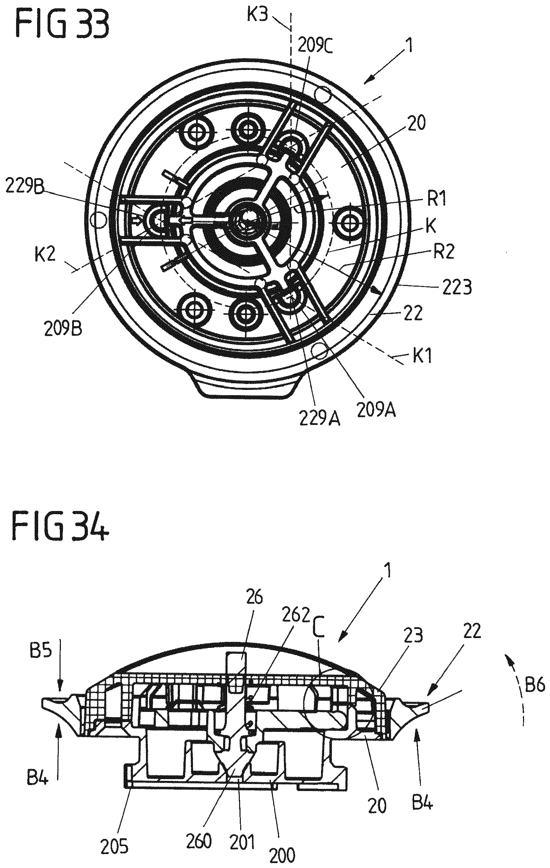

Wie dies schematisch in Fig. 33 eingezeichnet ist, sind die Lagerstellen 209A, 209B, 209C entlang eines Kreises K aneinander angereiht und dabei gleichverteilt entlang des Kreises K zueinander angeordnet. Die Lagerzapfen 229A, 229B, 229C greifen in die Lagerstellen 209A, 209B, 209C, die nach Art von senkrecht zu der Ebene des Kreises K erstreckten Halbschalen geformt sind, ein derart, dass die balligen Lagerzapfen 229A, 229B, 229C an den Lagerstellen 209A, 209B, 209C verkippbar und zudem senkrecht zur Ebene des Kreises K an den Lagerstellen 209A, 209B, 209C verschiebbar sind.

Hierdurch wird erreicht, dass das Verstellelement 22 um ganz beliebige Kippachsen K1, K2, K3 zu dem Gehäuseteil 20 verkippbar ist, nämlich um beliebige Kippachsen innerhalb der Ebene des Kreises K.

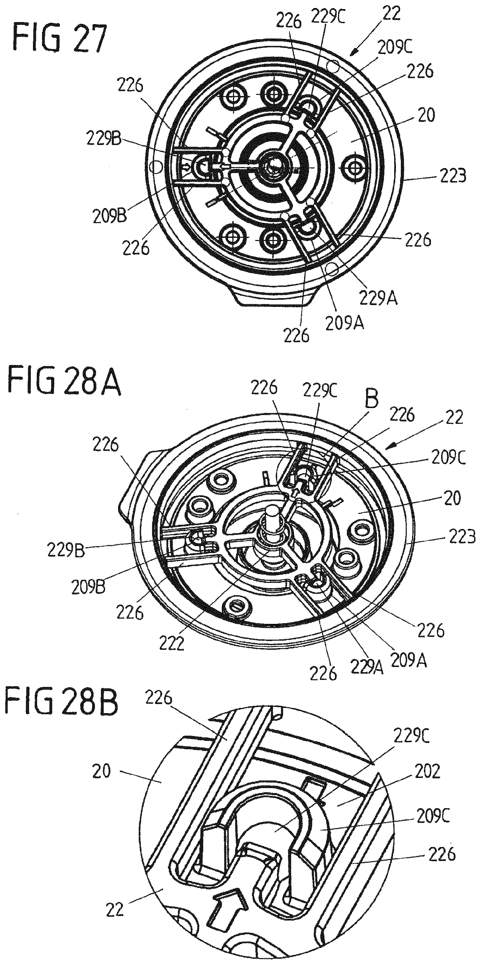

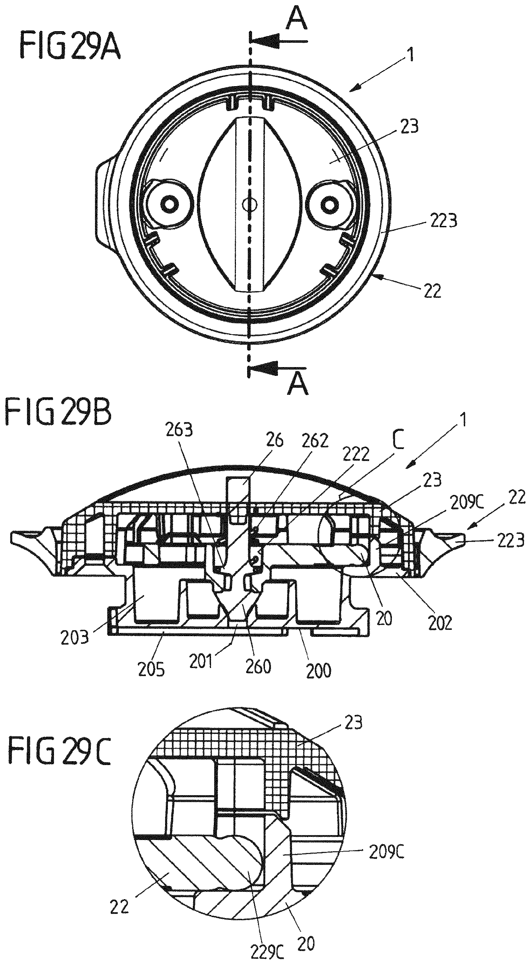

Wie dies aus Fig. 27 und Fig. 28A, 28B in Zusammenschau mit Fig. 29A bis 29C ersichtlich ist, liegen die Lagerzapfen 229A, 229B, 229C in einer nicht betätigten Stellung des Verstellelements 22 so in den Lagerstellen 209A, 209B, 209C ein, dass die Lagerzapfen 229A, 229B, 229C an einer dem Unterdruckelement 27 abgewandten Seite des Flansches 202 des Gehäuseteils 20 anliegen und darüber senkrecht zur Ebene des Kreises K an dem Gehäuseteil 20 abgestützt sind (siehe insbesondere die vergrößerte Ansicht gemäß Fig. 29C). In dieser nicht betätigten Stellung verschließt das Ventilelement 26 die Strömungsöffnung 201 im Boden 200 des Gehäuseteils 20, sodass bei mit der Ansetzbaugruppe 3 verbundenem Verschlussmodul 2 eine Unterdruckwirkung zwischen der Ansetzbaugruppe 3 und dem Verschlussmodul 2 besteht.

Das Verstellelement 22 kann über einen Betätigungsabschnitt 223 betätigt werden, der sich umfänglich an dem Verstellelement 22 erstreckt und ringförmig geschlossen ist. Der Betätigungsabschnitt 223 ist hierbei radial außerhalb des Kreises K angeordnet, wie dies aus Fig. 33 ersichtlich ist, indem der Betätigungsabschnitt 223 einen Radius R2 aufweist, der größer als der Radius R1 des Kreises K ist.

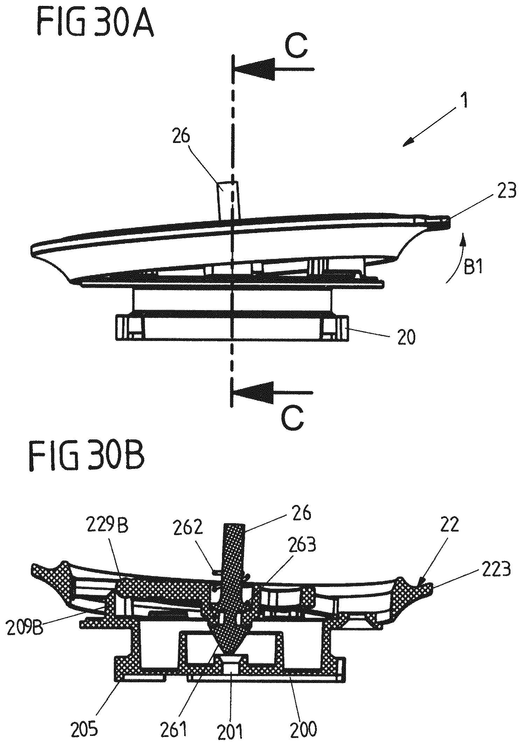

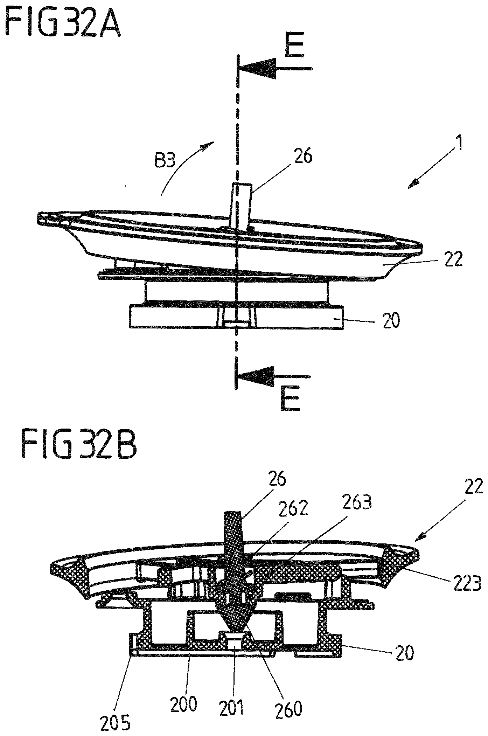

Das Verstellelement 22 kann insbesondere betätigt werden, indem ein Nutzer aus der Richtung der Ansetzbaugruppe 3 auf den Betätigungsabschnitt 223 einwirkt und den Betätigungsabschnitt 223 entlang einer Betätigungsrichtung B1, B2, B3, wie in Fig. 30A,30B bis 32A, 32B eingezeichnet, zu der Gehäusebaugruppe verstellt. Bei einem solchen Verstellen des Verstellelements 22 wird das Verstellelement 22 zu der Gehäusebaugruppe verkippt, indem sich ein oder zwei der Lagerzapfen 229A, 229B, 229C an den jeweiligen Lagerstelle 209A, 209B, 209C des Gehäuseteils 20 senkrecht zur Ebene des Kreises K am Flansch 202 abstützen und zumindest einer der Lagerzapfen 229A, 229B, 229C senkrecht zur Ebene des Kreises K an der jeweils zugeordneten Lagerstelle 209A, 209B, 209C verstellt wird, unter Abheben von dem Flansch 202 des Gehäuseteils 20, wie dies zum Beispiel aus Fig. 30B für den Lagerzapfen 229B ersichtlich ist.

Erfolgt ein Betätigen des Verstellelements 22 am Betätigungsabschnitt 223 am umfänglichen Ort eines Lagerzapfens 229A, 229B, 229C, so wird das Verstellelement 22 um eine Kippachse K1-K3 verkippt, die durch die anderen beiden Lagerzapfen 229A, 229B, 229C definiert ist. Wird das Verstellelement 22 beispielsweise am umfänglichen Ort des Lagerzapfens 229A betätigt, so verkippt das Verstellelement 22 um eine Kippachse K2 zu dem Gehäuseteil 20, die durch die anderen beiden Lagerzapfen 229A, 229B, 229C definiert ist, indem die Lagerzapfen 229A, 229B, 229C senkrecht zur Ebene des Kreises K am Flansch 202 abgestützt sind und der Lagerzapfen 229A an der Lagerstelle 209A von dem Flansch 202 abgehoben wird.

Eine Betätigung ist hierbei an jedem beliebigen Umfangsort des Betätigungsabschnitts 223 möglich. Ein Verkippen erfolgt dabei nicht notwendigerweise um eine durch zwei Lagerzapfen 229A, 229B, 229C definierte Kippachse K1-K3, sondern kann um jede beliebige Kippachse innerhalb der Ebene des Kreises K erfolgen, beispielsweise auch unter Abstützung des Verstellelements 22 über lediglich einen Lagerzapfen 229A, 229B, 229C am Flansch 202 des Gehäuseteils 20.

Aufgrund der Lagerung kann das Verstellelement 22 hierbei nicht nur durch Verkippen betätigt werden, sondern kann beispielsweise auch in eine Betätigungsrichtung B4, wie in Fig. 34 eingezeichnet, senkrecht zur Ebene des Kreises K verschoben und dadurch von dem Gehäuseteil 20 abgehoben werden, um das Ventilelement 26 aus seinem verschließenden Eingriff mit der Strömungsöffnung 201 im Boden 200 des Gehäuseteils 20 zu bringen.

Zudem ist eine Betätigung nicht nur aus Richtung der Ansetzbaugruppe 3 möglich, sondern kann auch in umgekehrter Betätigungsrichtung erfolgen, indem ein Nutzer in eine hin zur Ansetzbaugruppe 3 gerichtete Betätigungsrichtung B5 auf den Betätigungsabschnitt 223 einwirkt, wie dies in Fig. 34 eingezeichnet ist. In diesem Fall verkippt das Verstellelement 22 in einer Kipprichtung B6, unter Abstützung derjenigen Lagerzapfen 229A, 229B, 229C am Flansch 202, die dem Krafteinleitungspunkt zugewandt sind.

Eine Betätigung in die Betätigungsrichtung B5 ist dadurch möglich, dass der Betätigungsabschnitt 223 radial außerhalb des Kreises K und somit radial außerhalb der Lagerung über die Lagerstellen 209A, 209B, 209C angeordnet ist. Über die Radien R1, R2 des den Lagerstellen 209A, 209B, 209C zugeordneten Kreises K und des Betätigungsabschnitts 223 kann hierbei ein Hebelverhältnis für die Betätigung eingestellt werden, sodass auch in eine hin zur Ansetzbaugruppe 3 gerichtete Betätigungsrichtung B5 eine Betätigung ermöglicht wird.

Der der Erfindung zugrunde liegende Gedanke ist nicht auf die vorangehend geschilderten Ausführungsbeispiele beschränkt, sondern lässt sich grundsätzlich auch innerhalb des durch die Patentansprüche definierten Schutzumfangs in gänzlich andersgearteter Weise verwirklichen.

Insbesondere sind ganz unterschiedliche Elemente, die zum Bereitstellen von Unterdruckkräften zusammenwirken, denkbar und möglich. Insofern sind die vorangehend geschilderten Ausführungsformen nur beispielhaft zu verstehen.

Eine Verbindungsvorrichtung der hier beschriebenen Art kann zum Befestigen ganz unterschiedlicher Baugruppen aneinander dienen. Insbesondere ist die Verbindungsvorrichtung in ihrer Verwendung nicht auf die hier gezeigten Beispiele beschränkt. Vorteilhaft kann die Verbindungsvorrichtung zum Befestigen elektronischer Geräte, zum Beispiel einer Kamera oder eines Mobiltelefons, verwendet werden. Dies ist jedoch nicht beschränkend.

An der Gehäusebaugruppe können auch mehrere Strömungsöffnungen angeordnet sein, von denen bei Verstellen des Verstellelements zumindest eine freigegeben wird. Ein jeder Strömungsöffnung kann hierbei ein eigenes, mit dem Verstellelement verbundenes Ventilelement zugeordnet sein.

### Bezugszeichenliste

- 1: Verbindungsvorrichtung
- 2: Verschlussmodul
- 20: Gehäuseteil
- 200: Boden
- 201: Strömungsöffnung
- 202: Flansch
- 203: Aufnahmeraum
- 204: Erhabener Abschnitt
- 205: Formschlussabschnitt
- 206: Lagerfläche
- 207, 208: Lagerstelle
- 209A-C: Lagerstelle
- 21: Magnetelement
- 22: Verstellelement
- 220, 221: Lagerzapfen
- 222: Aufnahmeöffnung
- 223: Betätigungsabschnitt
- 224: Ausgang
- 225: Verbindungsabschnitt
- 226: Stege
- 227: Einlassöffnung
- 228: Lagerfläche
- 229A-C: Lagerzapfen
- 23: Gehäuseteil
- 230,231: Lagerstelle
- 232: Stützabschnitt
- 233,234: Öffnung
- 235: Ausnehmungen
- 24: Befestigungsbügel
- 25: Befestigungsring (Spannring)
- 26: Ventilelement
- 260: Ventilkopf
- 261: Fuß
- 262: Federelement
- 263: Kopplungsabschnitt
- 27: Unterdruckelement (Napfelement)
- 270: Bund
- 271: Öffnung
- 272: Flexibler Randabschnitt
- 3: Ansetzbaugruppe
- 30: Ansetzteil
- 300: Formschlussabschnitt
- 301: Aufnahmeöffnung
- 302: Ansetzfläche
- 31: Magnetelement
- 4: Baugruppe
- 5: Baugruppe
- A: Ansetzrichtung
- B: Raum
- B1-B6: Betätigungsrichtung
- K: Kreis
- K1-K3: Kippachse
- L: Löserichtung
- R1, R2: Radius

## Patentansprüche

1. Verbindungsvorrichtung (1) zum lösbaren Verbinden zweier Baugruppen (4, 5), mit
einem Verschlussmodul (2), das einer ersten der Baugruppen (4, 5) zugeordnet ist und eine Gehäusebaugruppe, ein an der Gehäusebaugruppe verstellbar angeordnetes Verstellelement (22) und ein Unterdruckelement (27) aufweist, und
einer Ansetzbaugruppe (3), die einer zweiten der Baugruppen (4, 5) zugeordnet ist, wobei das Unterdruckelement (27) entlang einer Ansetzrichtung (A) mit der Ansetzbaugruppe (3) verbindbar ist und in einer verbundenen Stellung derart mit der Ansetzbaugruppe (3) wechselwirkt, dass bei Belastung des Verschlussmoduls (2) und der Ansetzbaugruppe (3) relativ zueinander das Unterdruckelement (27) und die Ansetzbaugruppe (3) aufgrund einer Unterdruckwirkung zwischen dem Unterdruckelement (27) und der Ansetzbaugruppe (3) aneinander gehalten sind,
wobei das Verstellelement (22) zum Lösen des Unterdruckelements (27) von der Ansetzbaugruppe (3) um unterschiedliche Raumrichtungen zu der Gehäusebaugruppe verkippbar ist, um eine Strömungsöffnung (201) in der Gehäusebaugruppe für einen Zustrom von Luft in einen zwischen dem Unterdruckelement (27) und der Ansetzbaugruppe (3) vorhandenen Raum (B) freizugeben, **dadurch gekennzeichnet, dass**
die Gehäusebaugruppe ein erstes Gehäuseteil (20) und ein zweites Gehäuseteil (23) (21) aufweist, die das Verstellelement (22) zwischen sich aufnehmen.

2. Verbindungsvorrichtung (1) nach Anspruch 1, **dadurch gekennzeichnet, dass** das Verstellelement (22) in der verbundenen Stellung der Verbindungsvorrichtung (1) eine erste Stellung relativ zu der Gehäusebaugruppe einnimmt und zum Lösen des Unterdruckelements (27) von der Ansetzbaugruppe (3) aus der ersten Stellung heraus zum Freigeben der Strömungsöffnung (201) verstellbar ist.

3. Verbindungsvorrichtung (1) nach Anspruch 2, **dadurch gekennzeichnet, dass** das Verstellelement (22) gegenüber dem Gehäusebaugruppe in die erste Stellung vorgespannt ist.

4. Verbindungsvorrichtung (1) nach einem der Ansprüche 1 bis 3, **dadurch gekennzeichnet, dass** das Unterdruckelement (27) durch ein zumindest abschnittsweise elastisches Napfelement ausgebildet ist, wobei die Ansetzbaugruppe (3) ein Ansetzteil (30) aufweist, das eine Ansetzfläche (302) ausbildet, mit der das Unterdruckelement (27) verbindbar ist.

5. Verbindungsvorrichtung (1) nach einem der vorangehenden Ansprüche, **dadurch gekennzeichnet, dass** die Gehäusebaugruppe zumindest eine Lagerstelle (207, 208, 230, 231, 209A-209C) zur Lagerung des Verstellelements (22) aufweist.

6. Verbindungsvorrichtung (1) nach Anspruch 5, **dadurch gekennzeichnet, dass** das Verstellelement (22) zumindest einen Lagerzapfen (220, 221, 229A-229C) aufweist, der in der zumindest einen Lagerstelle (207, 208, 230, 231, 209A-209C) aufgenommen ist, wobei der zumindest eine Lagerzapfen (220, 221, 229A-229C) um eine erste Kippachse (K1) und eine zweite Kippachse (K2) in der zumindest einen Lagerstelle (207, 208, 230, 231) verkippbar ist.

7. Verbindungsvorrichtung (1) nach Anspruch 5 oder 6, **dadurch gekennzeichnet, dass** das Verstellelement (22) eine Mehrzahl von Lagerzapfen (220, 221, 229A-229C) und die Gehäusebaugruppe eine Mehrzahl von Lagerstellen (207, 208, 230, 231, 209A-209C) aufweist, wobei die Lagerzapfen (220, 221, 209A-209C) in je einer Lagerstelle (207, 208, 230, 231, 209A-209C) der Gehäusebaugruppe aufgenommen sind und ein jeder Lagerzapfen (220, 221, 229A-229C) in der zugeordneten Lagerstelle (207, 208, 230, 231, 209A-209C) verkippbar und zudem entlang einer Betätigungsrichtung (B1-B6), entlang derer das Verstellelement (22) an der Gehäusebaugruppe verstellbar ist, bewegbar ist.

8. Verbindungsvorrichtung (1) nach Anspruch 7, **dadurch gekennzeichnet, dass** die Lagerstellen (207, 208, 230, 231, 209A-209C) entlang eines Kreises (K) an der Gehäusebaugruppe aneinander angereiht sind.

9. Verbindungsvorrichtung (1) nach Anspruch 8, **dadurch gekennzeichnet, dass** die Strömungsöffnung (201) konzentrisch zu dem Kreis (K) an der Gehäusebaugruppe angeordnet ist.

10. Verbindungsvorrichtung (1) nach Anspruch 8 oder 9, **dadurch gekennzeichnet, dass** das Verstellelement (22) einen Betätigungsabschnitt (223) zum Betätigen des Verstellelements (22) durch einen Nutzer aufweist, wobei der Betätigungsabschnitt (223) einen Radius (R2) aufweist, der größer als der Radius (R1) des Kreises (K) ist.

11. Verbindungsvorrichtung (1) nach Anspruch 10, **dadurch gekennzeichnet, dass** der Betätigungsabschnitt (223) umfänglich an dem Verstellelement (22) erstreckt ist.

12. Verbindungsvorrichtung (1) nach einem der Ansprüche 5 bis 11, **dadurch gekennzeichnet, dass** die zumindest eine Lagerstelle (207, 208, 230, 231) durch ein Langloch ausgebildet ist.

13. Verbindungsvorrichtung (1) nach einem der vorangehenden Ansprüche, **dadurch gekennzeichnet, dass** die Strömungsöffnung (201) in einem Boden (200) der Gehäusebaugruppe gebildet ist, der in der verbundenen Stellung der Ansetzbaugruppe (3) zugewandt ist.

14. Verbindungsvorrichtung (1) nach einem der vorangehenden Ansprüche, **dadurch gekennzeichnet, dass** das Verschlussmodul (2) ein Ventilelement (26) aufweist, das an dem Verstellelement (22) angeordnet und durch Verstellen des Verstellelements (22) betätigbar ist.

15. Verbindungsvorrichtung (1) nach Anspruch 14, **dadurch gekennzeichnet, dass** das Ventilelement (26) einen Ventilkopf (260) aufweist, der in der verbundenen Stellung die Strömungsöffnung (201) strömungsdicht abdichtet.

16. Verbindungsvorrichtung (1) nach einem der vorangehenden Ansprüche, **dadurch gekennzeichnet, dass** die Gehäusebaugruppe des Verschlussmoduls (2) einen ersten Formschlussabschnitt (205) und die Ansetzbaugruppe (3) einen zweiten Formschlussabschnitt (300) aufweisen, wobei der erste Formschlussabschnitt (205) und der zweite Formschlussabschnitt (300) bei Ansetzen des Verschlussmoduls (2) und der Ansetzbaugruppe (3) aneinander formschlüssig zum Sperren einer Querbewegung zwischen dem Verschlussmodul (2) und der Ansetzbaugruppe (3) in Eingriff miteinander gelangen.

17. Verbindungsvorrichtung (1) nach einem der vorangehenden Ansprüche, **dadurch gekennzeichnet, dass** das Verschlussmodul (2) ein erstes Magnetelement (21) und die Ansetzbaugruppe (3) ein zweites Magnetelement (31) aufweisen, wobei das erste Magnetelement (21) und das zweite Magnetelement (31) sich in der verbundenen Stellung magnetisch anziehend gegenüberstehen.

18. Verbindungsvorrichtung (1) nach Anspruch 17, **dadurch gekennzeichnet, dass** das erste Magnetelement (21) und/oder das zweite Magnetelement (31) durch einen ringförmigen Permanentmagneten gebildet sind.

19. Elektronisches Gerät, insbesondere Kamera oder Mobiltelefon, mit einer Verbindungsvorrichtung (1) nach einem der vorangehenden Ansprüche zum Verbinden des elektronischen Geräts mit einer zugeordneten Baugruppe.

## Claims

1. A connecting device (1) for releasably connecting two assemblies (4, 5), comprising
a closure module (2) which is assigned to a first of the assemblies (4, 5), and has a housing assembly, an adjustment element (22) disposed so as to be adjustable on the housing assembly, and a vacuum element (27); and
an attachment assembly (3) which is assigned to a second of the assemblies (4, 5), wherein the vacuum element (27) is connectable to the attachment assembly (3) along an attachment direction (A) and in a connected position interacts with the attachment assembly (3) in such a manner that the vacuum element (27) and the attachment assembly (3), when the closure module (2) and the attachment assembly (3) are stressed relative to one another, are held together by virtue of a vacuum effect between the vacuum element (27) and the attachment assembly (3),
wherein the adjustment element (22) for releasing the vacuum element (27) from the attachment assembly (3) is able to be tilted about different spatial directions in relation to the housing assembly so as to expose a flow opening (201) in the housing assembly to an inflow of air into a space (B) present between the vacuum element (27) and the attachment assembly (3),
**characterized in that**
the housing assembly has a first housing part (20) and a second housing part (23) which therebetween receive the adjustment element (22).

2. The connecting device (1) as claimed in claim 1, **characterized in that** the adjustment element (22) in the connected position of the connecting device (1) assumes a first position relative to the housing assembly, and for releasing the vacuum element (27) from the attachment assembly (3) is adjustable from the first position so as to expose the flow opening (201).

3. The connecting device (1) as claimed in claim 2, **characterized in that** the adjustment element (22) in relation to the housing assembly is preloaded to the first position.

4. The connecting device (1) as claimed in one of claims 1 to 3, **characterized in that** the vacuum element (27) is configured by a cup element which is elastic at least in portions, wherein the attachment assembly (3) has an attachment part (30) which configures an attachment face (302) by way of which the vacuum element (27) is connectable.

5. The connecting device (1) as claimed in one of the preceding claims, **characterized in that** the housing assembly has at least one bearing point (207, 208, 230, 231, 209A-209C) for bearing the adjustment element (22).

6. The connecting device (1) as claimed in claim 5, **characterized in that** the adjustment element (22) has at least one bearing journal (220, 221, 229A-229C) which is received in the at least one bearing point (207, 208, 230, 231, 209A-20C), wherein the at least one bearing journal (220, 221, 229A-229C) in the at least one bearing point (207, 208, 230, 231) is able to be tilted about a first tilting axis (K1) and a second tilting axis (K2).

7. The connecting device (1) as claimed in claim 5 or 6, **characterized in that** the adjustment element (22) has a plurality of bearing journals (220, 221, 229A-229C), and the housing assembly has a plurality of bearing points (207, 208, 230, 231, 209A-209C), wherein the bearing journals (220, 221, 209A-209C) are in each case received in one bearing point (207, 208, 230, 231, 209A-209C) of the housing assembly, and each of the bearing journals (220, 221, 229A-229C) is able to be tilted in the assigned bearing point (207, 208, 230, 231, 209A-209C) and is moreover able to be moved along an activation direction (B1-B6) along which the adjustment element (22) is adjustable on the housing assembly.

8. The connecting device (1) as claimed in claim 7, **characterized in that** the bearing points (207, 208, 230, 231, 209A-209C) are lined up next to one another along a circle (K) on the housing assembly.

9. The connecting device (1) as claimed in claim 8, **characterized in that** the flow opening (201) is disposed so as to be concentric with the circle (K) on the housing assembly.

10. The connecting device (1) as claimed in claim 8 or 9, **characterized in that** the adjustment element (22) has an activation portion (223) for activating the adjustment element (22) by a user, wherein the activation portion (223) has a radius (R2) which is larger than the radius (R1) of the circle (K).

11. The connecting device (1) as claimed in claim 10, **characterized in that** the activation portion (223) extends circumferentially on the adjustment element (22).

12. The connecting device (1) as claimed in one of claims 5 to 11, **characterized in that** the at least one bearing point (207, 208, 230, 231) is configured by a slot.

13. The connecting device (1) as claimed in one of the preceding claims, **characterized in that** the flow opening (201) is formed in a base (200) of the housing assembly, said base (200) in the connected position facing the attachment assembly (3).

14. The connecting device (1) as claimed in one of the preceding claims, **characterized in that** the closure module (2) has a valve element (26) which is disposed on the adjustment element (22) and is able to be activated by adjusting the adjustment element (22).

15. The connecting device (1) as claimed in claim 14, **characterized in that** the valve element (26) has a valve head (260) which in the connected position seals the flow opening (201) in a fluidically tight manner.

16. The connecting device (1) as claimed in one of the preceding claims, **characterized in that** the housing assembly of the closure module (2) has a first form-fitting portion (205), and the attachment assembly (3) has a second form-fitting portion (300), wherein the first form-fitting portion (205) and the second form-fitting portion (300) when attaching the closure module (2) and the attachment assembly (3) to one another mutually engage in a positive locking manner for blocking a transverse movement between the closure module (2) and the attachment assembly (3).

17. The connecting device (1) as claimed in one of the preceding claims, **characterized in that** the closure module (2) has a first magnetic element (21), and the attachment assembly (3) has a second magnetic element (31), wherein the first magnetic element (21) and the second magnetic element (31) in the connected position are opposite one another in a magnetically attractive manner.

18. The connecting device (1) as claimed in claim 17, **characterized in that** the first magnetic element (21) and/or the second magnetic element (31) are/is formed by an annular permanent magnet.

19. An electronic apparatus, in particular a camera or a mobile phone, having a connecting device (1) as claimed in one of the preceding claims for connecting the electronic apparatus to an assigned assembly.

## Revendications

1. Dispositif de liaison (1) pour la liaison amovible de deux ensembles (4, 5), avec
un module de fermeture (2) qui est associé à un premier des ensembles (4, 5) et un composant de boîtier, un élément de réglage (22) agencé de manière réglable au niveau du composant de boîtier et un élément de dépression (27), et
un composant de fixation (3) qui est associé à un second des ensembles (4, 5), dans lequel l'élément de dépression (27) peut être relié le long d'un sens de fixation (A) au composant de fixation (3) et interagit dans une position reliée avec l'ensemble de fixation (3) de telle manière que lors de la sollicitation du module de fermeture (2) et de l'ensemble de fixation (3) l'un par rapport à l'autre, l'élément de dépression (27) et l'ensemble de fixation (3) soient maintenus l'un contre l'autre en raison d'une action de dépression entre l'élément de dépression (27) et l'ensemble de fixation (3),
dans lequel l'élément de réglage (22) est basculable pour desserrer l'élément de dépression (27) de l'ensemble de fixation (3) autour de sens spatiaux différents par rapport à l'ensemble de boîtier afin de libérer une ouverture d'écoulement (201) dans l'ensemble de boîtier pour une arrivée d'air dans un espace (B) présent entre l'élément de dépression (27) et l'ensemble de fixation (3), **caractérisé en ce que**
l'ensemble de boîtier présente une première partie de boîtier (20) et une seconde partie de boîtier (23) qui reçoivent entre elles l'élément de réglage (22).

2. Dispositif de liaison (1) selon la revendication 1, **caractérisé en ce que** l'élément de réglage (22) occupe dans la position reliée du dispositif de liaison (1) une première position relative à l'ensemble de boîtier et est réglable pour desserrer l'élément de dépression (27) de l'ensemble de fixation (3) hors de la première position pour la libération de l'ouverture d'écoulement (201).

3. Dispositif de liaison (1) selon la revendication 2, **caractérisé en ce que** l'élément de réglage (22) est précontraint par rapport à l'ensemble de boîtier dans la première position.

4. Dispositif de liaison (1) selon l'une quelconque des revendications 1 à 3, **caractérisé en ce que** l'élément de dépression (27) est réalisé par un élément de cuvette élastique au moins par sections, dans lequel l'ensemble de fixation (3) présente une partie de fixation (30) qui réalise une surface de fixation (302), à laquelle l'élément de dépression (27) peut être relié.

5. Dispositif de liaison (1) selon l'une quelconque des revendications précédentes, **caractérisé en ce que** l'ensemble de boîtier présente au moins un point d'appui (207, 208, 230, 231, 209A-209C) pour le logement de l'élément de réglage (22).

6. Dispositif de liaison (1) selon la revendication 5, **caractérisé en ce que** l'élément de réglage (22) présente au moins un tourillon (220, 221, 229A-229C) qui est reçu dans l'au moins un point d'appui (207, 208, 230, 231, 209A-209C), dans lequel l'au moins un tourillon (220, 221, 229A-229C) peut être basculé autour d'un premier axe de basculement (K1) et d'un second axe de basculement (K2) dans l'au moins un point d'appui (207, 208, 230, 231).

7. Dispositif de liaison (1) selon la revendication 5 ou 6, **caractérisé en ce que** l'élément de réglage (22) présente une pluralité de tourillons (220, 221, 229A-229C) et l'ensemble de boîtier une pluralité de points d'appui (207, 208, 230, 231, 209A-209C), dans lequel les tourillons (220, 221, 209A-209C) sont chacun reçus dans un point d'appui (207, 208, 230, 231, 209A-209C) de l'ensemble de boîtier et chaque tourillon (220, 221, 229A-229C) peut être basculé dans le point d'appui (207, 208, 230, 231, 209A-209C) associé et est de plus mobile le long d'un sens d'actionnement (B1-B6), le long duquel l'élément de réglage (22) est réglable sur l'ensemble de boîtier.

8. Dispositif de liaison (1) selon la revendication 7, **caractérisé en ce que** les points d'appui (207, 208, 230, 231, 209A-209C) sont alignés le long d'un cercle (K) sur l'ensemble de boîtier les uns sur les autres.

9. Dispositif de liaison (1) selon la revendication 8, **caractérisé en ce que** l'ouverture d'écoulement (201) est agencée de manière concentrique au cercle (K) au niveau de l'ensemble de boîtier.

10. Dispositif de liaison (1) selon la revendication 8 ou 9, **caractérisé en ce que** l'élément de réglage (22) présente une section d'actionnement (223) pour l'actionnement de l'élément de réglage (22) par un utilisateur, dans lequel la section d'actionnement (223) présente un rayon (R2) qui est supérieur au rayon (R1) du cercle (K).

11. Dispositif de liaison (1) selon la revendication 10, **caractérisé en ce que** la section d'actionnement (223) est étirée sur la périphérie au niveau de l'élément de réglage (22).

12. Dispositif de liaison (1) selon l'une quelconque des revendications 5 à 11, **caractérisé en ce que** l'au moins un point d'appui (207, 208, 230, 231) est réalisé par un trou oblong.

13. Dispositif de liaison (1) selon l'une quelconque des revendications précédentes, **caractérisé en ce que** l'ouverture d'écoulement (201) est formée dans un fond (200) de l'ensemble de boîtier, lequel est tourné dans la position reliée vers l'ensemble de fixation (3).

14. Dispositif de liaison (1) selon l'une quelconque des revendications précédentes, **caractérisé en ce que** le module de fermeture (2) présente un élément de vanne (26) qui est agencé au niveau de l'élément de réglage (22) et est actionnable par réglage de l'élément de réglage (22).

15. Dispositif de liaison (1) selon la revendication 14, **caractérisé en ce que** l'élément de vanne (26) présente une tête de vanne (260) qui rend étanche à l'écoulement dans la position reliée l'ouverture d'écoulement (201).

16. Dispositif de liaison (1) selon l'une quelconque des revendications précédentes, **caractérisé en ce que** l'ensemble de boîtier du module de fermeture (2) présente une première section à complémentarité de forme (205) et l'ensemble de fixation (3) une seconde section à complémentarité de forme (300), dans lequel la première section à complémentarité de forme (205) et la seconde section à complémentarité de forme (300) parviennent en prise entre elles lors de la fixation du module de fermeture (2) et de l'ensemble de fixation (3) par complémentarité de forme l'un à l'autre pour le verrouillage d'un mouvement transversal entre le module de fermeture (2) et l'ensemble de fixation (3).

17. Dispositif de liaison (1) selon l'une quelconque des revendications précédentes, **caractérisé en ce que** le module de fermeture (2) présente un premier élément magnétique (21) et le composant de fixation (3) présente un second élément magnétique (31), dans lequel le premier élément magnétique (21) et le second élément magnétique (31) se font face en s'attirant magnétiquement dans la position reliée.

18. Dispositif de liaison (1) selon la revendication 17, **caractérisé en ce que** le premier élément magnétique (21) et/ou le second élément magnétique (31) sont formés par un aimant permanent annulaire.

19. Appareil électronique, en particulier caméra ou téléphone mobile avec un dispositif de liaison (1) selon l'une quelconque des revendications précédentes pour la liaison de l'appareil électronique avec un ensemble associé.
